(19) Europäisches Patentamt
European Patent Office
Office européen des brevets

(11) **EP 4 576 612 A1**

(12) **DEMANDE DE BREVET EUROPEEN**

(43) Date de publication:
**25.06.2025 Bulletin 2025/26**

(21) Numéro de dépôt: **24221263.7**

(22) Date de dépôt: **18.12.2024**

(51) Classification Internationale des Brevets (IPC):
***H04B 10/70*** *(2013.01)*

(52) Classification Coopérative des Brevets (CPC):
**H04B 10/70**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **21.12.2023 FR 2314818**

(71) Demandeur: **THALES**
**92190 Meudon (FR)**

(72) Inventeurs:
• **AYMERIC, Raphaël**
**31037 TOULOUSE Cedex 1 (FR)**
• **BERTRAND, Mathieu**
**31037 TOULOUSE Cedex 1 (FR)**
• **SOTOM, Michel**
**31037 TOULOUSE Cedex 1 (FR)**

(74) Mandataire: **Atout PI Laplace**
**Immeuble Up On**
**25 Boulevard Romain Rolland**
**CS 40072**
**75685 Paris Cedex 14 (FR)**

(54) **SYSTÈME DE COMMUNICATION QUANTIQUE UTILISANT UNE CORRECTION DE LA POLARISATION DE PHOTONS**

(57)    Il est proposé un récepteur (20-m) d'un signal multiplexé ($S_{10-n}$) et d'un signal optique ($S_{10-h}$) transmis indépendamment à travers un canal de transmission (50), le signal multiplexé comprenant un premier signal quantique ($Q_n$) et au moins un signal ($R_{n1}$) de contrôle d'état de polarisation, ledit signal optique comprenant un deuxième signal quantique ($Q_h$), ledit récepteur comprenant une chaîne de traitement (Cm) et un module de corrélation (260) associés à une base de polarisation d'au moins un état de polarisation, ladite chaîne étant adaptée pour déterminer l'état de polarisation du signal de contrôle et pour modifier la polarisation du signal multiplexé pour aligner l'état déterminé sur l'état de ladite base, le module étant configuré pour effectuer une mesure de corrélation entre les premier et deuxième signaux quantiques, et pour générer, à partir de la mesure, au moins un signal d'information ($I_{mk}$) d'état intrication des premier et deuxième signaux quantiques.

Figure 6

## Description

## Domaine technique

La présente invention concerne de manière générale les télécommunications quantiques, et en particulier un émetteur pour transmettre des signaux optiques comprenant des signaux quantiques intriqués, un récepteur pour recevoir des signaux optiques comprenant des signaux quantiques, et un système comprenant de tels émetteurs et récepteurs, et les procédés associés mis en oeuvre.

L'application principale des systèmes de télécommunication quantiques actuels est d'utiliser la théorie de l'information quantique pour distribuer une clé cryptographique (ou clé de cryptage) entre deux dispositifs de télécommunications (c'est-à-dire deux utilisateurs), via des protocoles quantiques spécifiques, dans le but de chiffrer ultérieurement et de manière sécurisée les communications entre ces deux dispositifs. Les clés cryptographiques secrètes obtenues ont un degré de sécurité supérieur aux clés obtenues par des protocoles classiques.

Dans un système de télécommunication quantique les deux utilisateurs peuvent être trop distants physiquement pour utiliser simplement les étapes habituelles des protocoles quantiques QKD (ou 'Quantum Key Distribution' selon l'expression anglo-saxonne correspondante) pour partager une telle clé de cryptage. Dans ce cadre, des protocoles quantiques de téléportation d'état quantique et de partage d'intrication permettent de lier deux dispositifs quantiques distants entre eux, pour partager une clé de cryptage.

De tels protocoles quantiques de téléportation d'état quantique et de partage d'intrication consistent à faire interférer des particules quantiques entre elles, issues de deux signaux quantiques intriqués, chaque particule appartenant à une paire de particules quantiques intriquée.

L'information permettant de générer une clé de cryptage est obtenue en mesurant une variable d'encodage des particules quantiques (appelé aussi « qubits »), correspondant généralement à des photons, préalablement encodée.

Cette variable d'encodage à une valeur aléatoire mais est identique pour les deux particules intriquées, ce qui permet de partager une même information. Une variable d'encodage d'un qubit correspond à un degré de liberté de la particule quantique et peut être la polarisation du photon. Cependant, l'état de polarisation des particules quantiques au cours de leur propagation, entre différents dispositifs d'un système, subit des rotations aléatoires. Celles-ci peuvent être dues à la biréfringence des divers milieux traversés ou encore au déplacement du dispositif émetteur par rapport au dispositif récepteur, tel que le déplacement d'un satellite (émetteur ou récepteur) par rapport à une station sol dans le cas de communications via un segment spatial.

Pour éviter de telles rotations aléatoires d'état de polarisation, certains systèmes quantiques connus utilisent une propagation uniquement en espace libre dans laquelle la polarisation de photons est stable, au cours de leur propagation à travers un canal de transmission (ou canal de communication). Cependant, dans certaines applications, il est nécessaire d'utiliser une transmission en optique guidée, en tant que canal de transmission, par exemple pour une propagation sur un réseau sol ou à bord d'un satellite pour assouplir les contraintes de construction de la charge utile.

Pour compenser (ou corriger) les rotations aléatoires d'état de polarisation, certains systèmes connus utilisent, en début de mise à oeuvre de protocole quantique, une référence unique de polarisation qui permet d'estimer initialement les rotations de polarisation induites lors de la propagation et d'aligner la polarisation des photons transmis avec les bases de mesures en réception. Cependant cette référence unique ne permet pas de corriger les nouvelles rotations de polarisation après la phase initiale d'estimation. Alternativement, d'autres systèmes existants utilisent plutôt une génération périodique de signaux de références des bases d'encodage à partir de la source de signaux quantiques intriqués et donc multiplexés temporellement avec les qubits, ce qui réduit le débit utile du système.

Il existe ainsi un besoin pour un système de communication quantique amélioré, capable de corriger en temps réel les rotations des états de polarisation des qubits.

## Résumé de l'invention

A cet effet, il est proposé un récepteur configuré pour recevoir un signal optique multiplexé et un signal optique transmis indépendamment à travers un canal de transmission, le signal optique multiplexé comprenant un premier signal quantique, le signal optique comprenant un deuxième signal quantique, le signal optique multiplexé comprenant en outre au moins un signal de contrôle d'état de polarisation, le récepteur comprenant une chaîne de traitement associée à une base de polarisation composée d'au moins un état de polarisation et adaptée pour déterminer l'état de polarisation du au moins un signal de contrôle d'état de polarisation et pour modifier la polarisation du signal optique multiplexé de manière à aligner l'état de polarisation déterminé par rapport à un des au moins un état de polarisation de la base associée, le récepteur comprenant en outre un module de corrélation adapté pour effectuer une mesure de corrélation entre le premier signal quantique issu du signal optique multiplexé à polarisation modifiée et le deuxième signal quantique, le module de corrélation étant associée à la base de polarisation, le module de corrélation étant en outre adapté pour générer au moins un signal d'information à partir de la mesure de corrélation, le signal d'information comprenant des informations d'intrication des états de polarisation des premier et deuxième signaux quantiques.

Dans des modes de réalisation, la chaîne de traitement peut comprendre un module de détection de signal de contrôle et un dispositif d'analyse, le module de détection de signal de contrôle étant configuré pour démultiplexer le au moins un signal de contrôle et le premier signal quantique à partir du signal optique multiplexé, le module de détection étant en outre configuré pour acheminer le signal de contrôle démultiplexé vers le dispositif d'analyse de polarisation, le dispositif d'analyse comprenant au moins une unité de détection adaptée pour détecter le signal de contrôle selon un des au moins un état de polarisation de la base associée.

Selon certains aspects, le module de détection peut comprendre en outre un processeur configuré pour analyser l'état de polarisation déterminé et pour générer un signal d'asservissement appliqué à un module de correction de polarisation du signal optique multiplexé.

Dans certains modes de réalisation, le récepteur peut être formé à partir de fibres à maintien de polarisation et/ou de fibres optiques monomodes.

La présente invention propose de plus un émetteur configuré pour émettre des signaux optiques comprenant :

- un générateur de signaux configuré pour générer un premier signal quantique, un deuxième signal quantique, et un signal de contrôle d'état de polarisation, le premier signal quantique et le deuxième signal quantique étant des signaux quantiques intriqués entre eux,

- un intégrateur de signal configuré pour générer un signal optique multiplexé, le signal multiplexé comprenant le premier signal de contrôle et le premier signal quantique.

L'émetteur est configuré pour transmettre à travers un canal de transmission, le signal optique multiplexé et un signal optique comprenant le deuxième signal quantique.

Les modes de réalisation de l"invention fournissent ainsi un système de communication quantique comprenant une pluralité d'émetteurs, et au moins un récepteur.

Dans des modes de réalisation, la pluralité d'émetteurs peut comprendre au moins un premier émetteur et un deuxième émetteur, et le système peut comprendre en outre une pluralité de récepteurs auxiliaires comprenant un premier récepteur auxiliaire configuré pour recevoir un signal optique comprenant un signal quantique transmis par le premier émetteur, et un deuxième récepteur auxiliaire configuré pour recevoir un signal optique comprenant un signal quantique transmis par le deuxième émetteur, chaque récepteur auxiliaire étant associé à une base de polarisation de mesure composée d'au moins un état de polarisation et adaptée pour mesurer le signal quantique associé selon au moins des au moins un état de polarisation de la base de polarisation de mesure associée. Chaque récepteur auxiliaire peut être configuré pour recevoir un signal d'information d'intrication comprenant des informations d'intrication d'états de polarisation de signaux quantiques transmis par le au moins un récepteur, chaque récepteur auxiliaire étant configuré pour déterminer une clé de cryptage quantique partagée à partir de la mesure du signal quantique associé et des informations d'intrication d'états de polarisation de signaux quantiques.

Selon certains aspects, pour un ou les deux récepteurs auxiliaires, le signal optique reçu par le récepteur auxiliaire peut être un signal optique multiplexé comprenant en outre un signal de contrôle d'état de polarisation, le ou les récepteurs auxiliaires comprenant une chaîne de traitement associée à la base de polarisation de mesure et adaptée pour déterminer l'état de polarisation du signal de contrôle d'état de polarisation et pour modifier la polarisation du signal optique multiplexé de manière à aligner l'état de polarisation déterminé par rapport à un des au moins un état de polarisation de la base de polarisation de mesure associée.

Dans certains modes de réalisation, les signaux multiplexés peuvent être des signaux multiplexés fréquentiellement.

Avantageusement, la valeur absolue de la différence de longueur d'onde entre la longueur d'onde quantique d'un signal quantique et la longueur d'onde de référence d'un signal de contrôle peut être supérieure ou égale à une valeur minimale de différence de longueur d'onde.

Il est également proposé un procédé pour déterminer au moins un signal d'information en réponse à la réception d'un signal optique multiplexé et d'un signal optique transmis indépendamment à travers un canal de transmission, le signal optique multiplexé comprenant un premier signal quantique, le signal optique comprenant un deuxième signal quantique, le signal optique multiplexé comprenant en outre au moins un signal de contrôle d'état de polarisation, le procédé comprenant une phase de traitement, associée à une base de polarisation composée d'au moins un état de polarisation, pour déterminer l'état de polarisation du au moins un signal de contrôle d'état de polarisation et pour modifier la polarisation du signal optique multiplexé de manière à aligner l'état de polarisation déterminé par rapport à un des au moins un état de polarisation de la base associée,. Le procédé comprend en outre un étape de corrélation comprenant une mesure de corrélation entre le premier signal quantique issu du signal optique multiplexé à polarisation modifiée et le deuxième signal quantique, la mesure de corrélation étant associée à la base de polarisation, l'étape de corrélation comprenant en outre la génération du au moins un signal d'information à partir de la mesure de corrélation, le signal d'information comprenant des informations d'intrication des états de polarisation des premier et deuxième signaux quantiques.

Les modes de réalisation de l'invention permettent ainsi de corriger les rotations de polarisation des qubits transmis entre des émetteurs et des récepteurs de signaux quantiques intriqués, afin notamment d'établir une clé quantique entre deux récepteurs distants.

En particulier, les modes de réalisation de l'invention fournissent des émetteurs de signaux optiques, associés à des paires de particules quantiques intriquées, permettant d'intégrer de manière robuste un ou plusieurs signaux de références d'état de polarisation de ces particules quantiques.

De telles références peuvent être générées à une puissance quelconque, indépendamment de la génération des qubits, pour former une solution efficace et abordable en termes de complexité matérielle. Un émetteur en optique guidée, selon les modes de réalisation de l'invention, présente avantageusement une compacité volumique et massique réduite, ainsi qu'un encombrement et une robustesse optimisés. Par ailleurs, un multiplexage fréquentiel de telles références aux qubits permet de maintenir un débit important de transmission d'information utile (i.e. les qubits).

Le ou les récepteurs selon les modes de réalisation de l'invention permettent de corriger en temps réel les rotations de polarisation subies par les qubits avant détection. De tels récepteurs permettent notamment d'analyser les qubits et les signaux de références indépendamment, afin d'aligner au mieux la polarisation des qubits avec des bases de mesures du récepteur.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système de communication quantique, selon des modes de réalisation de l'invention.

[Fig.2] La figure 2 est un schéma représentant un système de communication quantique, selon des modes de réalisation de l'invention.

[Fig.3] La figure 3 est un schéma représentant un émetteur d'un système de communication quantique, selon des modes de réalisation de l'invention.

[Fig.4] La figure 4 est un schéma représentant un émetteur d'un système de communication quantique, selon des modes de réalisation de l'invention.

[Fig.5] La figure 5 est un schéma représentant un générateur de signaux d'un émetteur d'un système de communication quantique, selon des modes de réalisation de l'invention.

[Fig.6] La figure 6 est un schéma représentant un récepteur intermédiaire d'un système de communication quantique, selon des modes de réalisation de l'invention.

[Fig.7] La figure 7 est un schéma représentant un récepteur intermédiaire d'un système de communication quantique, selon des modes de réalisation de l'invention

[Fig.8] La figure 8 est un schéma représentant une chaîne de traitement d'un récepteur intermédiaire d'un système de communication quantique, selon des modes de réalisation de l'invention

[Fig.9] La figure 9 est un schéma représentant un module de détection d'un signal de contrôle d'un récepteur intermédiaire d'un système de communication quantique, selon des modes de réalisation de l'invention

[Fig.10] La figure 10 est un schéma représentant un module de détection d'un signal de contrôle d'un récepteur intermédiaire d'un système de communication quantique, selon des modes de réalisation de l'invention

[Fig.11] La figure 11 est un schéma représentant un récepteur final d'un système de communication quantique, selon des modes de réalisation de l'invention

[Fig.12] La figure 12 est un schéma représentant un module d'analyse de photon quantique d'un récepteur final d'un système de communication quantique, selon des modes de réalisation de l'invention.

[Fig.13] La figure 13 est un organigramme représentant un procédé d'émission de signaux optiques mis en oeuvre par un émetteur d'un système de communication quantique, selon des modes de réalisation de l'invention.

[Fig.14] La figure 14 est un organigramme représentant un procédé de réception intermédiaire de signaux optiques mis en oeuvre par un récepteur d'un système de communication quantique, selon des modes de réalisation de l'invention.

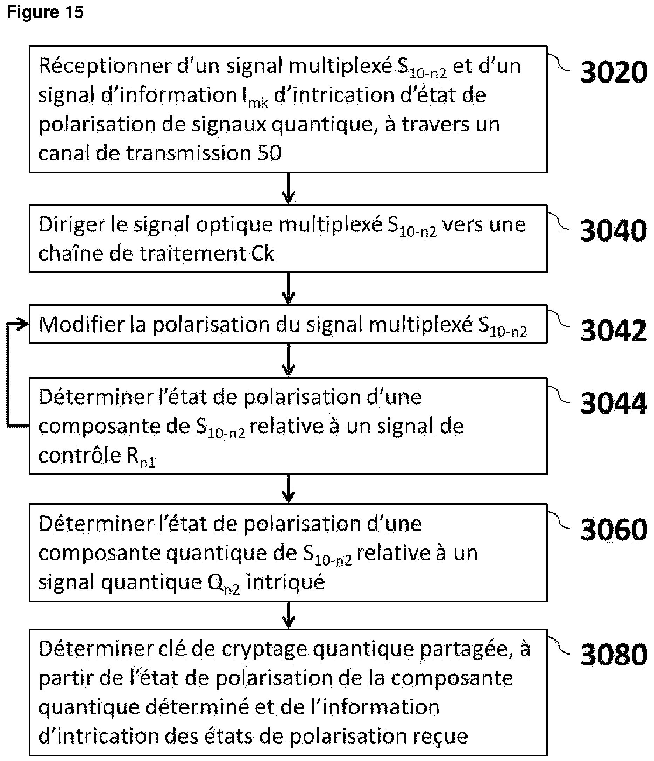

[Fig.15] La figure 15 est un organigramme représentant un procédé de réception final de signaux optiques mis en oeuvre par un récepteur d'un système de communication quantique, selon des modes de réalisation de l'invention.

Des références identiques sont utilisées dans les figures pour désigner des éléments identiques ou analogues. Pour des raisons de clarté, les éléments représentés ne sont pas à l'échelle.

## Description détaillée

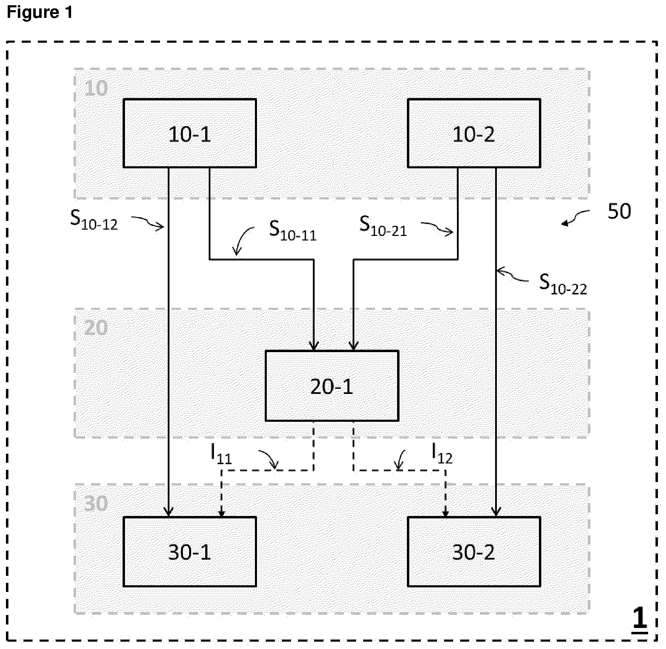

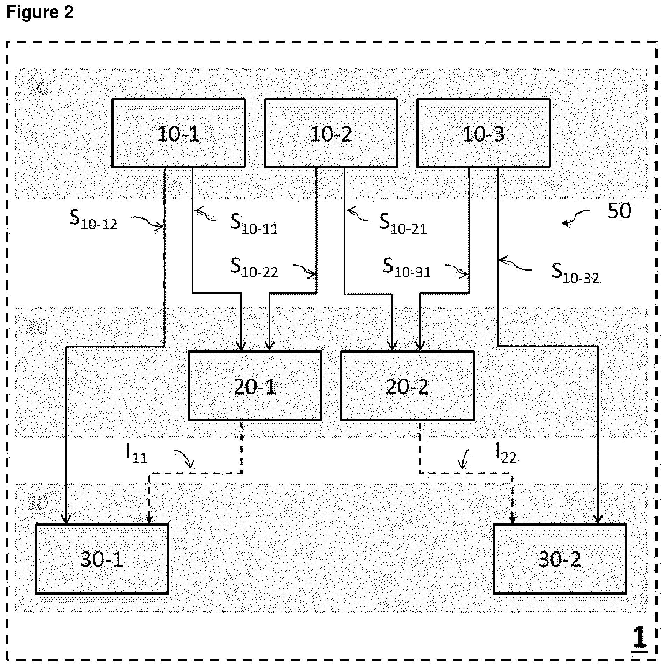

Les figures 1 et 2 représentent schématiquement un système de communication quantique 1 comprenant un premier ensemble de dispositifs 10, un deuxième ensemble de dispositifs 20 et un troisième ensemble de dispositifs 30, aptes à communiquer entre eux, selon des modes de réalisation de l'invention.

Le premier ensemble de dispositifs 10 du système 1 comprend une pluralité de dispositifs émetteurs 10-n. L'indice 'n' est associé au n-ième dispositif émetteur du système 1 et est un entier compris entre 1 et N, la valeur de N étant supérieure ou égal à 2.

Le deuxième ensemble de dispositifs 20 du système 1 comprend un ou plusieurs dispositifs récepteurs 20-m, encore appelés 'récepteurs intermédiaires'. L'indice 'm' est associé au m-ième dispositif récepteur du système 1 et est un entier compris entre 1 et M, la valeur de M étant supérieure ou égal à 1.

Le troisième ensemble de dispositifs 30 du système 1 comprend deux dispositifs récepteurs, encore appelés 'récepteurs finaux', notés 30-1 et 30-2 (ou plus généralement 30-k, l'indice 'k' étant un entier égale à 1 ou 2).

Le système de communication quantique 1 peut être utilisé dans diverses applications. Par exemple et sans limitations, le système de communication quantique 1 peut être utilisé dans le domaine spatial et comprendre un émetteur 10-n et/ou un récepteur (20-m et/ou 30-k) monté à bord d'un satellite. Dans un tel exemple d'application de l'invention au domaine spatial, le système 1 peut également comprendre un émetteur 10-n et/ou un récepteur (20-m et/ou 30-k) au sol, qui peuvent être embarqués dans un ou plusieurs dispositifs terrestres. Le système 1 peut également être utilisé dans des applications avioniques, au moins un des dispositifs émetteurs 10-n et/ou récepteurs (20-m et/ou 30-k) étant alors un dispositif avionique. Le système 1 peut aussi être utilisé dans des applications de réseau par fibre optique, dans lesquelles au moins un des dispositifs émetteurs 10-n et/ou un récepteur (20-m et/ou 30-k) est un dispositif pour fibre optique intégrée dans un réseau au sol.

Un dispositif du système 1 peut être fixe ou en mouvement par rapport à un autre dispositif avec lequel il communique.

A titre d'exemple non limitatif, des dispositifs du système de communication quantique 1 peuvent être des ordinateurs quantiques ou des réseaux de senseurs quantiques.

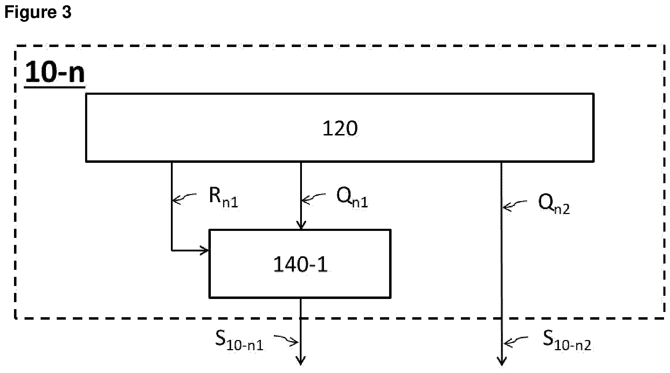

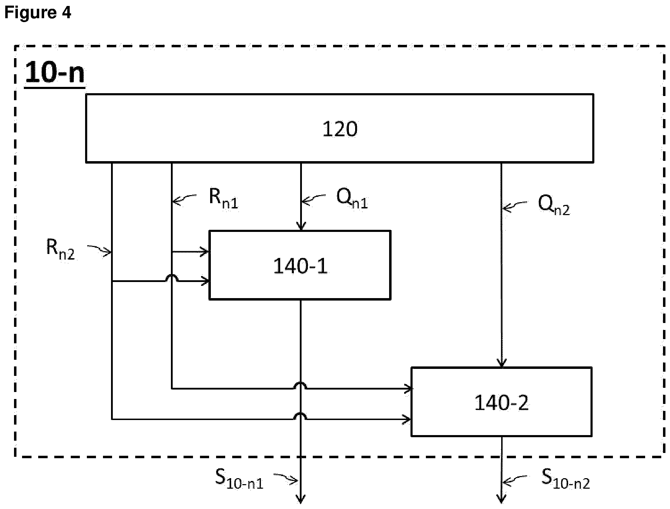

Un émetteur 10-n comprend un générateur de signaux 120 (encore appelé 'module de génération de signaux') et au moins un intégrateur de signal (encore appelé 'module d'intégration de signaux'), comme représenté sur les figures 3 et 4 qui illustrent des modes de réalisation de l'invention.

Tel qu'utilisé ici, un 'signal optique' (encore appelé simplement « signal ») résulte d'une ou plusieurs impulsions de lumière cohérente provenant d'une source optique, telle que par exemple un faisceau laser. Un faisceau laser peut notamment être caractérisé par sa cadence d'impulsions f et par une impulsion laser (i.e. le signal) définie par sa fréquence $\omega$, son intensité I, sa polarisation P et sa phase. La 'fréquence $\omega$' du faisceau laser désigne la 'fréquence optique de l'impulsion laser multipliée par $2\pi$' définie en fonction de la longueur d'onde du faisceau $\lambda$, telle que $\lambda \times \frac{\omega}{2\pi} = c$, c désignant la vitesse de la lumière.

Un émetteur 10-n du premier ensemble de dispositifs 10 du système 1 est configuré pour générer et transmettre, à travers un canal de transmission, généralement noté 50, deux signaux optiques d'émission distincts, notés $S_{10\text{-}n1}$ et $S_{10\text{-}n2}$ (encore appelés respectivement 'premier signal optique d'émission' et 'deuxième signal optique d'émission').

Le canal de transmission 50 peut être par exemple un espace libre (ou 'free space' selon l'expression anglo-saxonne) ou un dispositif fibré (ou d'optique guidée) de transport d'informations utilisant par exemple des éléments de fibre optique pour la communication, selon le domaine d'application de l'invention.

Un canal de transmission 50 relie un émetteur et un récepteur donné.

Par exemple, un canal de transmission $50_{E\text{-}R1}$ relie un émetteur donné E à un premier récepteur R1 pour la transmission d'un premier signal.

Un canal de transmission $50_{E\text{-}R2}$ peut relier ce même émetteur donné E à un deuxième récepteur R2 pour la transmission d'un deuxième signal (indépendamment du premier signal émis par l'émetteur E).

De même, un récepteur donné R peut être relié à un premier émetteur E1 par un canal de transmission $50_{E1\text{-}R}$ pour recevoir un premier signal tandis qu'il est relié à un canal de transmission $50_{E2\text{-}R}$ pour recevoir un deuxième signal (indépendamment du premier signal) d'un deuxième émetteur E2 distinct du premier émetteur. De tels exemples sont illustrés sur les figures 1 et 2.

Chaque signal optique d'émission délivré par un émetteur 10-n comprend un signal quantique, noté $Q_{n1}$ et $Q_{n2}$ respectivement. Les deux signaux quantiques $Q_{n1}$ et $Q_{n2}$ sont intriqués entre eux, chaque photon d'un signal quantique étant issu respectivement d'une paire de photons intriquée générée par le générateur de signaux 120. Le premier signal quantique $Q_{n1}$ est associé à un état de polarisation, noté $P_{Q\text{-}n1}$, et le deuxième signal quantique $Q_{n2}$ est associé à un état de polarisation, noté $P_{Q\text{-}n2}$.

Telle qu'utilisée ici, l'expression 'signal quantique' peut faire référence à un signal optique impulsionnel ayant un faible nombre de photon par impulsion.

La mesure d'un signal quantique fournit une mesure de détection d'un photon (ou 'particule') dépendant d'une « probabilité de détection » de ce photon.

Par ailleurs, un signal quantique peut faire référence à un signal optique comprenant au moins un photon qui est intriqué avec un autre photon d'un autre 'signal quantique'. Ces deux signaux quantiques sont alors dits 'signaux quantiques intriqués'. Une 'paire de photons intriquée' fait référence à deux photons formant un système lié, et présentant des états quantiques dépendant l'un de l'autre quelle que soit la distance qui les sépare. Il existe des corrélations entre les propriétés physiques (notamment entre leur état de polarisation), qui peuvent être mesurées, de ces particules distinctes. L'intrication d'une paire de photons découle du fait que ces photons, compris respectivement dans un signal quantique spécifique, sont tous deux générés à partir d'un même photon de pompe. Les signaux quantiques intriqués peuvent être des signaux optiques impulsionnels ou continus.

Dans des modes de réalisation, les états de polarisation $P_{Q-n1}$ et $P_{Q-n2}$, du premier et du deuxième signal quantique $Q_{n1}$ et $Q_{n2}$ respectivement peuvent être identiques (i.e. corrélés) et/ou orthogonaux entre eux (i.e. anticorrélés). Avantageusement, les états de polarisation $P_{Q-n1}$ et $P_{Q-n2}$ des signaux quantiques intriqués ne sont pas des états de polarisation individuels bien définis à la génération des signaux, et peuvent être définis que lors d'une mesure d'intrication.

Le premier signal optique d'émission $S_{10-n1}$ délivré par l'émetteur 10-n est un signal optique multiplexé (encore appelé 'signal optique multiplexé' ou 'signal de communication multiplexé') comprenant le premier signal quantique $Q_{n1}$ et un premier signal optique intégré de contrôle de polarisation, noté $R_{n1}$. Un tel signal est encore appelé 'premier signal de contrôle' ou 'premier signal de référence'.

Dans des modes de réalisation, l'état de polarisation du premier signal de contrôle $R_{n1}$ peut être défini dans une base de polarisation $B_{Q-n1}$ (appelée également 'première base de polarisation de contrôle). Par exemple et sans limitation, la base de polarisation $B_{Q-n1}$ peut être la base de polarisation H/V comprenant un état de polarisation linéaire de type H, c'est à dire « horizontale », et un état de polarisation linéaire de type V, c'est à dire « verticale ». Dans d'autres modes de réalisation, la base de polarisation $B_{Q-n1}$ peut être la base de polarisation D/A comprenant un état de polarisation linéaire de type D, c'est à dire « diagonal >>, et un état de polarisation linéaire de type A, c'est à dire « anti-diagonal ».

Dans certains modes de réalisation, le premier signal optique multiplexé $S_{10-n1}$ délivré par l'émetteur 10-n peut comprendre en outre un deuxième signal optique intégré de contrôle de polarisation, noté $R_{n2}$. Un tel signal est encore appelé 'deuxième signal de contrôle' ou 'deuxième signal de référence'. Avantageusement, l'état de polarisation du deuxième signal de contrôle $R_{n2}$ peut être défini dans une base de polarisation $B_{Q-n2}$ (appelée également 'deuxième base de polarisation de contrôle). En particulier, la base de polarisation $B_{Q-n2}$ peut être une base de polarisation non-orthogonale à la base de polarisation $B_{Q-n1}$ du premier signal de contrôle $R_{n1}$.

Dans certains modes de réalisation, le deuxième signal optique d'émission $S_{10-n2}$ délivré par l'émetteur 10-n peut également être un signal optique multiplexé comprenant, en outre du deuxième signal quantique $Q_{n2}$, le premier signal de contrôle $R_{n1}$ et/ou le deuxième signal de contrôle $R_{n2}$.

Un récepteur intermédiaire 20-m du deuxième ensemble de dispositifs 20 du système 1 est configuré pour recevoir, du canal de transmission 50, d'une part un signal optique multiplexé, $S_{10-n}$ (c'est-à-dire un signal $S_{16-n1}$ ou $S_{16-n2}$), transmis par un premier émetteur 10-n du premier ensemble de dispositifs 10, et d'autre part un signal optique d'émission, $S_{10-h}$ (correspondant à un signal $S_{10-h1}$ ou $S_{10-h2}$) transmis par un deuxième émetteur, noté 10-h, du premier ensemble de dispositifs 10 et différent du premier émetteur 10-n, l'indice 'h' étant un entier compris entre 1 et N et différent de l'indice 'n'. Ainsi, comme illustré sur les figures 1 et 2, le récepteur intermédiaire 20-1 par exemple est configuré pour recevoir d'une part le premier signal optique d'émission transmis par le premier émetteur 10-1, et d'autre part un signal optique d'émission transmis par le deuxième émetteur 10-2. Le premier signal optique d'émission reçu par le récepteur intermédiaire 20-1 est le premier signal optique d'émission $S_{10-11}$ transmis par le premier émetteur 10-1 correspondant à un signal optique multiplexé comprenant un signal quantique $Q_n$ (ou $Q_{n1}$) et au moins un premier signal de contrôle $R_{n1}$. En outre, le signal optique d'émission transmis par le deuxième émetteur 10-2 peut être soit le premier signal optique d'émission $S_{10-21}$ correspondant à un signal optique multiplexé, soit le deuxième signal optique d'émission $S_{10-22}$ correspondant également à un signal optique multiplexé, ou comprenant uniquement un signal quantique $Q_h$ (ou $Q_{22}$, comme dans l'exemple illustré sur les figures 1 et 2).

Le récepteur intermédiaire 20-m est alors configuré pour effectuer une estimation du premier signal de contrôle $R_{n1}$ reçu, via le signal optique d'émission transmis par le premier émetteur 10-n, ce qui fournit un premier signal de contrôle estimé, noté $R_{mn1}$.

Dans des modes de réalisation où le signal optique multiplexé $S_{10-n}$ reçu par le récepteur intermédiaire 20-m, transmis par le premier émetteur 10-n, comprend un deuxième signal de contrôle $R_{n2}$, le récepteur intermédiaire 20-m peut en outre être configuré pour effectuer une estimation du deuxième signal de contrôle $R_{n2}$ reçu, transmis par le premier émetteur 10-n, ce qui fournit un deuxième signal de contrôle estimé, noté $R_{mn2}$.

Dans certains modes de réalisation où le signal optique d'émission $S_{10-h}$ transmis par le deuxième émetteur 10-h et reçu par le récepteur intermédiaire 20-m est un signal optique multiplexé comprenant un premier signal de contrôle $R_{h1}$ et/ou un deuxième signal de contrôle $R_{h2}$, le récepteur intermédiaire 20-m peut en outre être configuré pour effectuer une estimation du premier et/ou du deuxième signal de contrôle $R_{h1}$ et/ou $R_{h2}$ reçu, transmis par le deuxième émetteur 10-h, ce qui fournit un troisième et/ou un quatrième signal de contrôle

estimé, notés respectivement $R_{mh1}$ et Rmh2.

Par ailleurs, le récepteur intermédiaire 20-m est configuré pour effectuer une mesure corrélée de signaux quantiques, relative au signal quantique $Q_n$ du signal optique multiplexé $S_{10-n}$ reçu, transmis par le premier émetteur 10-n, et au signal quantique $Q_h$ (i.e. $Q_{h1}$ ou $Q_{h2}$) du signal optique d'émission $S_{10-h}$ (i.e. $S_{10-h1}$ ou $S_{10-h2}$ respectivement) reçu, transmis par le deuxième émetteur 10-h. La mesure corrélée de signaux quantiques est en outre réalisée à partir du premier signal de contrôle estimé $R_{mn1}$ par le récepteur intermédiaire 20-m.

Dans des modes de réalisation la mesure corrélée de signaux quantiques peut être en outre réalisée à partir du deuxième signal de contrôle estimé $R_{mn2}$, du troisième signal de contrôle estimé $R_{mh1}$ et/ou du quatrième signal de contrôle estimé Rmh2.

Chacune des particules quantiques issues des deux signaux quantiques, c'est-à-dire $Q_n$ et $Q_h$, reçue séparément par le récepteur intermédiaire 20-m est associée à une paire de photons intriquée générée indépendamment. Par ailleurs, les particules du premier signal quantique $Q_{n1}$ du signal optique multiplexé $S_{10-n1}$ transmis par le premier émetteur 10-n au récepteur 20-m, appartiennent à une paire intriquée associée aux particules du deuxième signal quantique $Q_{n2}$ du signal optique d'émission $S_{10-n2}$ émis par le premier émetteur 10-n. De la même manière, les particules du signal quantique $Q_h$, par exemple et sans limitation du premier signal quantique $Q_{h1}$, du signal optique d'émission $S_{10-h1}$ transmis par le deuxième émetteur 10-h au récepteur 20-m, appartiennent à une paire intriquée associée aux particules du deuxième signal quantique $Q_{h2}$ du signal optique d'émission $S_{10-h2}$ émis par le deuxième émetteur 10-h.

Avantageusement, la mesure corrélée de signaux quantiques effectuée par le récepteur intermédiaire 20-m peut être une mesure de Bell, projetant ces particules quantiques reçues, $Q_n$ et $Q_h$, dans un état de Bell intriqué en polarisation. Une telle projection induit une intrication (ou corrélation) dite 'intrication résultante', entre ces particules reçues. Cette intrication résultante induit en conséquence une intrication dite 'intrication téléportée' (ou 'intrication induite' ou 'intrication conséquente'), entre les particules quantiques intriquées aux particules $Q_n$ et $Q_h$ reçus par le récepteur 20-m, c'est-à-dire respectivement entre :

- les particules du deuxième signal quantique $Q_{n2}$ du signal optique d'émission $S_{10-n2}$ émis par le premier émetteur 10-n (i.e. non-reçu par le récepteur 20-m), et les particules du deuxième signal quantique $Q_{h2}$ du signal optique d'émission $S_{10-h2}$ émis par le deuxième émetteur 10-h (i.e. non-reçu par le récepteur 20-m), si le récepteur intermédiaire 20-m est configuré pour recevoir le signal optique multiplexé $S_{10-h1}$, ou

- les particules du deuxième signal quantique $Q_{n2}$ du

signal optique d'émission $S_{10-n2}$ émis par le premier émetteur 10-n (i.e. non-reçu par le récepteur 20-m), et les particules du premier signal quantique $Q_{h1}$ du signal optique multiplexé $S_{10-h1}$ émis par le deuxième émetteur 10-h (i.e. non-reçu par le récepteur 20-m), si le récepteur intermédiaire 20-m est configuré pour recevoir le signal optique d'émission $S_{10-h2}$.

Dans des modes de réalisation, les deux récepteurs finaux 30-1 et 30-2 (encore appelés « récepteurs additionnels » ou « récepteurs auxiliaires ») du troisième ensemble de dispositifs 30 du système 1 peuvent être configurés pour recevoir chacun un signal optique d'émission distinct, issu du canal de transmission 50. Les deux signaux optiques d'émission, reçus chacun par un récepteur final 30-k, sont transmis indépendamment par deux émetteurs distincts issus du premier ensemble de dispositifs 10. Ces signaux optiques d'émission sont ainsi non reçus au préalable par un récepteur intermédiaire 20-m, quelconque, du deuxième ensemble de dispositifs 20.

Dans des modes de réalisation, le premier récepteur final 30-1 peut alors être configuré pour recevoir un signal optique d'émission $S_{10-n}$ (et spécifiquement $S_{10-n2}$) transmis par un émetteur 10-n, tandis que le deuxième récepteur final 30-2 peut être configuré pour recevoir un signal optique d'émission $S_{10-h}$ (et spécifiquement $S_{10-h2}$ ou $S_{10-h1}$) transmis par un autre émetteur 10-h du premier ensemble de dispositifs 10. Chaque récepteur final 30-k peut ainsi être configuré pour effectuer une estimation du signal quantique issu du signal optique d'émission reçu, ce qui fournit un signal quantique reçu estimé, noté $S_{Qk}$ respectivement (i.e. $S_{Q1}$ pour le premier récepteur final 30-1 ou $S_{Q2}$ pour le deuxième récepteur final 30-2).

Par exemple et sans limitation, comme illustré sur les figures 1 et 2, le premier récepteur final 30-1 peut être configuré pour recevoir le signal optique d'émission $S_{10-12}$ (étant optionnellement un signal optique multiplexé) transmis par le premier émetteur 10-1, et être ainsi configuré pour déterminer le signal quantique reçu estimé $S_{Q1}$ (i.e. estimation du deuxième signal quantique $Q_{12}$ issu du signal $S_{10-12}$).

Dans l'exemple illustré sur la figure 1, le deuxième récepteur final 30-2 peut être configuré pour recevoir le signal optique d'émission $S_{10-22}$ (étant optionnellement un signal optique multiplexé) transmis par le deuxième émetteur 10-2, tandis que dans l'exemple illustré sur la figure 2, le deuxième récepteur final 30-2 peut être configuré pour recevoir le signal optique d'émission $S_{10-32}$ (étant optionnellement un signal optique multiplexé) transmis par un troisième émetteur 10-3 du premier ensemble de dispositifs 10. Le deuxième récepteur final 30-2 peut être également configuré pour déterminer le signal quantique reçu estimé $S_{Q2}$ (i.e. estimation du deuxième signal quantique $Q_{22}$ issu du signal $S_{10-22}$, ou $Q_{32}$ issu du signal $S_{10-32}$ par exemple).

Par ailleurs, dans des modes de réalisation où le deuxième ensemble de dispositifs 20 du système 1 comprend un unique récepteur intermédiaire, noté alors 20-1, comme représenté sur la figure 1, l'unique récepteur 20-1 peut être en outre configuré pour générer deux signaux d'information comprenant chacun le résultat de la mesure corrélée de signaux quantiques effectuée par l'unique récepteur 20-1 (c'est-à-dire comprenant le résultat de la projection des particules quantiques reçues indépendamment dans un état de polarisation de Bell). Chaque signal d'information, noté $I_{12}$ ou $I_{22}$, comprenant des informations d'intrication résultante issues de la mesure corrélée effectuée, peut être transmis respectivement à un deux récepteurs finaux 30-1 ou 30-2.

Ainsi, telle qu'utilisée ici, l'homme du métier comprendra aisément que l'expression 'informations d'intrication résultante' fait référence à des 'informations de corrélation' entre des signaux quantiques issues de la mesure de corrélation entre ces signaux optiques indépendants (c'est-à-dire entre les particules quantiques reçues $Q_n$ et $Q_h$ qui ne sont pas issues d'une opération de génération de signaux intriqués contrairement par exemple aux signaux quantiques intriqués entre eux, notés $Q_{n1}$ et $Q_{n2}$ respectivement, généré par un même émetteur 10-n).

Alternativement, dans des modes de réalisation où le deuxième ensemble de dispositifs 20 du système 1 comprend plusieurs récepteurs intermédiaires, comme représenté sur la figure 2, un récepteur 20-m prédéterminé parmi le deuxième ensemble 20 peut être configuré pour générer un premier signal d'information comprenant le résultat de la mesure corrélée de signaux quantiques, effectuée par le récepteur 20-m prédéterminé, tandis qu'un autre récepteur, noté 20-p, prédéterminé également parmi le deuxième ensemble 20 peut être configuré pour générer un deuxième signal d'information comprenant le résultat de la mesure corrélée de signaux quantiques effectuée par l'autre récepteur 20-p prédéterminé. Dans ce cas, l'indice 'p' est un entier compris entre 1 et M et différent de l'indice 'm'. Le premier signal d'information, noté par exemple $I_{mk}$, comprend des informations d'intrication résultante issues de la mesure corrélée, effectuée par le récepteur 20-m prédéterminé, et peut être transmis à un récepteur 30-k des deux récepteurs finaux, tandis que le deuxième signal d'information, noté par exemple $I_{pq}$, comprend des informations d'intrication résultante issues de la mesure corrélée, effectuée par le récepteur 20-p prédéterminé, et peut être transmis à l'autre récepteur 30-q des deux récepteurs finaux du système 1. Dans ce mode de réalisation, l'indice 'q' est un entier égale à 1 ou 2, et différent de l'indice 'k'.

Les signaux d'information, notés généralement $I_{mk}$, peuvent être transmis par un récepteur intermédiaire à un récepteur final du système 1, à travers le canal de transmission 50. Par ailleurs, une valeur d'information d'intrication résultante, à inclure dans un signal d'information à transmettre, peut correspondre, par exemple et sans limitation, à une valeur d'intrication égale à 1, associée à des photons de signaux quantiques $Q_n$ et $Q_h$ reçus ayant des états de polarisation identiques entre eux (i.e. corrélés), ou alternativement à une valeur d'intrication égale à 0 associée à des photons reçus ayant des états de polarisation différents entre eux (i.e. anticorrélés).

Ainsi, chaque récepteur final 30-k (30-1 et 30-2) du troisième ensemble de dispositifs 30 du système 1 peut être configuré pour recevoir un seul signal d'information d'intrication $I_{mk}$ transmis par un récepteur intermédiaire 20-m du deuxième ensemble de dispositifs 20, et pour déterminer (i.e. en déduire) la ou les informations d'intrication résultante associées.

Selon un aspect de l'invention, le premier récepteur final 30-1 et le deuxième récepteur final 30-2 du troisième ensemble de dispositifs 30 du système 1 peuvent être configurés pour déterminer (i.e. établir) une clé de cryptage quantique, en utilisant le signal quantique reçu $S_{Q1}$ estimé par le premier récepteur final 30-1 et le signal quantique reçu $S_{Q2}$ estimé par le deuxième récepteur final 30-2. En particulier, une telle distribution quantique de clé(s) est effectuée également à partir des signaux d'information d'intrication $I_{m1}$ et $I_{m2}$ (ou par exemple $I_{m1}$ et $I_{q2}$) reçu par les récepteurs finaux 30-k, et donc à partir des informations d'intrication résultante associées, les deux signaux quantiques reçus estimés $S_{Qk}$ étant associés respectivement à une intrication téléportée générée par une ou plusieurs intrications résultantes issues d'un ou plusieurs récepteurs intermédiaires 20-m. Le système 1 peut ainsi être un système de distribution quantique de clés de cryptage par « téléportation » quantique. C'est-à-dire que le système 1 peut être configuré pour procéder à une distribution quantique de clé(s) en utilisant un ou plusieurs répéteurs quantiques, correspondant respectivement à un ou plusieurs récepteurs intermédiaires configurés pour « répéter » des informations d'intrication résultante issues initialement de plusieurs émetteurs de paires de photons intriqués générées indépendamment. La distribution quantique de clé(s) peut notamment être mise en oeuvre au sein d'un service de communication spatial ou terrestre dans le but d'assurer la sécurisation d'une partie ou de l'ensemble des communications échangées entre les récepteurs finaux par exemple.

Les figures 3 et 4 représentent schématiquement un émetteur 10-n du premier ensemble de dispositifs 10 configuré pour former au moins un signal optique multiplexé, selon des modes de réalisation de l'invention.

Le signal optique multiplexé transmis par l'émetteur 10-n est généré via, un intégrateur de signal de l'émetteur 10-n, à partir d'un signal quantique et au moins un signal de contrôle, délivré par un générateur de signaux 120.

Dans des modes de réalisation, l'émetteur 10-n peut comprendre un unique intégrateur de signal, noté 140-1 (ou 140), configuré pour générer le signal optique multiplexé $S_{10-n1}$.

Avantageusement, l'émetteur 10-n peut comprendre deux modules d'intégration de signal, notés 140-1 et 140-2, chacun configuré pour générer un signal optique multiplexé. Le premier intégrateur 140-1 peut être configuré pour générer le premier signal optique multiplexé $S_{10-n1}$ et le deuxième intégrateur 140-2 peut être configuré pour générer le deuxième signal optique multiplexé $S_{10-n2}$.

L'unique (ou le premier) intégrateur de signal 140-1 est configuré pour générer le (premier) signal optique multiplexé $S_{10-n1}$, à partir du premier signal quantique $Q_{n1}$ et (au moins) du signal de contrôle $R_{n1}$, comme représenté sur les figures 3 et 4.

Dans certains modes de réalisation où un émetteur 10-n est configuré pour produire les deux signaux de contrôle $R_{n1}$ et $R_{n2}$, comme représenté sur la figure 4, le premier (ou l'unique) intégrateur de signal 140-1 peut être configuré pour générer le (premier) signal optique multiplexé $S_{10-n1}$, en outre à partir du deuxième signal de contrôle $R_{n2}$.

Dans des modes de réalisation, le deuxième intégrateur de signal 140-2, représenté sur la figure 4, peut être configuré pour générer le deuxième signal optique multiplexé $S_{10-n2}$, à partir du deuxième signal quantique $Q_{n2}$ et du premier signal de contrôle $R_{n1}$ et/ou du deuxième signal de contrôle $R_{n2}$.

Ainsi, en d'autre termes, un module d'intégration d'un émetteur 10-n, configuré pour générer un signal optique multiplexé, est adapté pour multiplexer optiquement (ou combiner optiquement), sur un même chemin optique, un signal quantique avec un ou plusieurs signaux de contrôle.

Dans des modes de réalisation où un émetteur 10-n est un dispositif optique (ou tout-optique) guidée, c'est-à-dire comprenant des voies optiques de transmission de signal constituées de fibres optiques et/ou de guides d'onde dits intégrés, utilisés typiquement en photonique intégrée, un ou plusieurs moyens de transmission de l'émetteur peuvent être constitués de fibres à maintien de polarisation, ou PMF (acronyme pour l'expression anglo-saxonne *Polarization Maintaining Fiber)* et/ou des fibres optiques monomodes, ou SMF (acronyme pour l'expression anglo-saxonne *Single Mode Fibre).*

Dans des modes de réalisation, un signal optique multiplexé généré par un émetteur 10-n du premier ensemble de dispositifs 10 peut être multiplexé fréquentiellement. Dans ce cas, le générateur de signaux 120 de l'émetteur peut être configuré pour générer les signaux quantiques intriqués, $Q_{n1}$ et $Q_{n2}$, de longueur d'onde notée $\lambda_Q$ (ou de longueurs d'onde respective $\lambda_{Qn1}$ et $\lambda_{Qn2}$, et également appelée(s) 'longueur(s) d'onde quantique(s)'), et au moins le premier signal de contrôle $R_{n1}$ de longueur d'onde de contrôle (ou 'longueur d'onde de référence' notée $\lambda_{Rn1}$), la ou les longueurs d'onde quantiques étant distinctes de la longueur d'onde de contrôle.

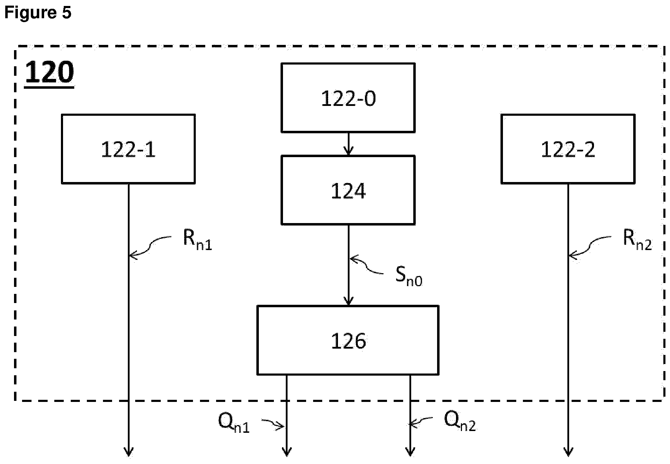

Dans des modes de réalisation, le générateur de signaux 120 peut être en outre configuré pour générer le deuxième signal de contrôle $R_{n2}$ de longueur d'onde de

contrôle notée $\lambda_{Rn2}$, les longueurs d'onde $\lambda_Q$, $\lambda_{Rn1}$ et $\lambda_{Rn2}$ étant toutes les trois distinctes entre elles. La figure 5 représente schématiquement un tel générateur de signaux 120, selon des modes de réalisation de l'invention.

Avantageusement, le générateur de signaux 120 peut comprendre une première source laser 122-0 émettant un faisceau laser (ou 'laser de pompe') de longueur d'onde $\lambda_{pompe}$. La longueur d'onde de pompe $\lambda_{pompe}$ d'émission laser peut se situer dans le visible ou l'infrarouge. Par exemple et de façon non limitative, la première source laser 122-0 peut être une diode laser DFB (acronyme pour l'expression anglo-saxonne correspondante *'Distributed Feedback'*, signifiant à rétroaction distribuée) utilisant un réseau de Bragg permettant de choisir la longueur d'onde d'émission $\lambda_{pompe}$. La longueur d'onde $\lambda_{pompe}$ d'émission choisie de la diode laser peut être égale par exemple à 780nm. Une telle diode laser émet notamment un faisceau laser continu. Alternativement, la première source laser 122-0 peut être une unité laser impulsionnel, c'est-à-dire à gain commuté (ou *gain-switched* selon l'expression anglo-saxonne).

Le générateur de signaux 120 peut également comprendre un ou deux autres sources laser additionnelles, notées 122-1 et 122-2, comme représenté sur la figure 5, configurées pour émettre respectivement un faisceau laser de longueur d'onde $\lambda_{R1}$ et un faisceau laser de longueur d'onde $\lambda_{R2}$. Les longueurs d'onde $\lambda_{R1}$ et $\lambda_{R2}$ d'émission laser peuvent se situer dans le visible ou l'infrarouge. Par exemple et de façon non limitative, la ou les sources laser additionnelles 122-1 et 122-2 peuvent être des diodes laser DFB ou des unités laser impulsionnelles.

Selon certains modes de réalisation, le module de génération de signaux 120 peut comprendre en outre une ou plusieurs unités de modulation d'intensité 124 configurées pour moduler l'intensité des impulsions laser générées en sortie de la première source laser 122-0 et former des impulsions quantiques.

Une unité de modulation d'intensité 124 peut également être configurée pour moduler la cadence des impulsions laser, de l'ordre de quelques kilohertz jusqu'à quelques dizaines de gigahertz par exemple, et/ou la largeur temporelle des impulsions laser, par exemple jusqu'à quelques nanosecondes.

Comme représenté sur la figure 5, le module de génération de signaux 120 peut en outre comprendre une unité d'intrication 126, configuré pour recevoir un unique signal optique initial, noté $S_{n0}$, et pour délivrer les deux signaux quantiques intriqués, correspondant au premier et au deuxième signal quantique $Q_{n1}$ et $Q_{n2}$, comprenant des paires de photons intriqués. Une telle unité d'intrication 126 peut être avantageusement disposée en sortie d'une unité de modulation d'intensité 124.

Par exemple et sans limitation, l'unité d'intrication 126 peut être implémentée sous la forme d'une boucle Sagnac, dans laquelle, le passage du signal

optique initial $S_{n0}$ à travers un cristal non-linéaire (ou un microrésonateur), en particulier dans deux sens distincts, génère une paire de photons intriqués en polarisation. Un tel cristal non-linéaire peut être un cristal PPLN (ou *Periodically poled lithium niobate* selon l'expression anglo-saxonne correspondante).

Avantageusement, les longueurs d'onde quantiques $\lambda_{Qn1}$ et $\lambda_{Qn2}$ (ou $\lambda_Q$) des signaux quantiques intriqués peuvent être déterminées en fonction de la longueur d'onde de pompe $\lambda_{pompe}$ du signal optique initial $S_{n0}$. En particulier, la conservation de l'énergie au cours de la génération d'une paire de photons intriqués étant respectée, la somme des fréquences des photons intriqués est égale à la fréquence du photon de pompe initial. A titre d'illustration, pour une longueur d'onde $\lambda_{pompe}$ égale à 780nm, les longueurs d'onde quantiques peuvent être égale approximativement à 1560nm, pour respecter la conservation de l'énergie.

Dans des modes de réalisation, la différence fréquentielle entre une longueur d'onde quantique $\lambda_Q$ et une longueur d'onde de référence ($\lambda_{R1}$ et/ou $\lambda_{R2}$) peut être supérieure ou égale à une première valeur minimale $\delta\lambda$ de différence de longueur d'onde, selon l'inégalité (01) suivante :

$$\left| \lambda_Q - \lambda_{R1/R2} \right| \geq \delta\lambda \qquad (01)$$

Par ailleurs, dans des modes de réalisation où le générateur 120 comprend deux sources laser 122-1 et 122-2 distinctes, la différence fréquentielle entre les longueurs d'onde de référence ($\lambda_{R1}$ et/ou $\lambda_{R2}$) de chacun des signaux de contrôle $R_{n1}$ et $R_{n2}$ peut être supérieure ou égale à une deuxième valeur minimale $\delta\lambda'$ de différence de longueur d'onde, selon l'inégalité (02) suivante :

$$\left| \lambda_{R1} - \lambda_{R2} \right| \geq \delta\lambda' \qquad (02)$$

Avantageusement, la première valeur minimale $\delta\lambda$ et la deuxième valeur minimale $\delta\lambda'$ de différence de longueur d'onde peuvent être prédéfinies et égales, par exemple et sans limitation, à 1.6nm et à 0.8nm respectivement.

Dans des modes de réalisation où l'émetteur 10-n est un dispositif comprenant des moyens de transmission de signal en espace libre, une unité d'intrication 126 du générateur de signaux 120 peut comprendre un ou plusieurs filtres dichroïques permettant notamment de diriger le signal optique initial $S_{n0}$ vers la boucle Sagnac et/ou séparer (i.e. filtrer), sur deux chemins optiques distincts, les deux photons de chaque paire de photons intriquée formée pour délivrer les deux signaux quantiques intriqués $Q_{n1}$ et $Q_{n2}$.

Dans les modes de réalisation où un signal multiplexé généré par l'émetteur 10-n est multiplexé fréquentiellement (i.e. les longueurs d'onde quantique $\lambda_Q$ et de référence $\lambda_{R1}$ et/ou $\lambda_{R2}$, sont distinctes entre elles), un intégrateur de signal (140-1 et/ou 140-2) de l'émetteur 10-n peut comprendre une ou deux unités de multiplexage en longueur d'onde ou WDM (signifiant selon l'expression anglo-saxonnes *Wavelength Division Multiplexing*), chaque unité étant adaptée pour combiner un signal quantique considéré et un des signaux de contrôle ($R_{n1}$ ou $R_{n2}$) sur un même chemin optique en un signal résultant.

Dans des modes de réalisation, un tel intégrateur de signal peut alternativement comprendre une ou deux filtres dichroïques, chaque filtre étant adapté pour combiner un signal quantique considéré et un des signaux de contrôle ($R_{n1}$ ou $R_{n2}$) sur un même chemin optique en un signal résultant.

Dans des modes de réalisation, un signal optique multiplexé généré par un émetteur 10-n du premier ensemble de dispositifs 10 peut être multiplexé temporellement. Dans ce cas, un tel signal multiplexé peut être un signal comprenant un ensemble de deux ou trois impulsions distinctes temporellement, l'ensemble étant répété selon une période T, les impulsions distinctes correspondant respectivement à un signal quantique intriqué, $Q_{n1}$ ou $Q_{n2}$, un premier signal de contrôle $R_{n1}$ et/ou un deuxième signal de contrôle $R_{n2}$.

Avantageusement, les signaux quantiques intriqués et les signaux de contrôle générés par le générateur de signaux 120 peuvent être des signaux impulsionnels caractérisés par une période T identique à la période du signal multiplexé délivré par l'émetteur 10-n.

Dans des modes de réalisation, le générateur de signaux 120 peut être configuré pour générer la paire de particules intriquées ($Q_{n1}$ et $Q_{n2}$) et les signaux de contrôle $R_{n1}$ et $R_{n2}$ selon un décalage temporel prédéfini entre chaque impulsion. Alternativement (ou en outre), un intégrateur de signal (140-1 et/ou 140-2) peut être configuré pour appliquer un décalage temporel prédéfini entre un signal quantique et un signal de contrôle de manière à obtenir des impulsions de signaux multiplexés temporellement.

Il est à noter que dans les modes de réalisation impliquant un multiplexage temporel, les particules intriquées ($Q_{n1}$ et $Q_{n2}$) d'une même paire ne sont pas décalées temporellement.

La différence temporelle résultante entre chacune des impulsions distinctes successives dans un signal multiplexé peut ainsi être strictement inférieure à la période T de répétition du signal résultant (ou du signal quantique), selon les inégalités (03) et (04) suivantes :

$$\left| t_Q - t_{R1/R2} \right| < T \qquad (03)$$

$$\left| t_{R1} - t_{R2} \right| < T \qquad (04)$$

Dans ces modes de réalisation où le signal multiplexé généré par un émetteur 10-n est multiplexé temporellement, les longueurs d'onde quantique $\lambda_Q$ et de référence ($\lambda_{R1}$ et/ou $\lambda_{R2}$) peuvent être égales entre elles.

Dans ce cas, la première source laser 122-0 et la ou les sources laser additionnelles 122-1 et 122-2 peuvent par exemple correspondre à une seule source laser 122-0, et le générateur de signaux 120 peut comprendre en outre une unité de séparation de faisceau (non représentée sur les figures) configurée pour fournir une ou deux composantes de signal associées aux signaux de contrôle $R_{n1}$ et $R_{n2}$, ainsi qu'une autre composante de signal associée au signal optique initial $S_{n0}$. Une telle unité de séparation de faisceau peut comprendre un ou plusieurs coupleurs optiques, symétriques ou asymétriques, par exemple à maintien de polarisation. L'unité de séparation de faisceau peut en outre être un sélectionneur optique générant un décalage temporel prédéfini entre chaque composante de signal délivrée.

Dans des modes de réalisation, l'unité de séparation de faisceau du générateur de signaux 120 peut être disposée en sortie de la première source laser 122-0, les signaux de contrôle $R_{n1}$ et $R_{n2}$ résultants correspondant alors à des signaux d'impulsions lumineuses classiques (c'est-à-dire non quantiques). Alternativement, cette unité de séparation de faisceau peut être disposée en sortie d'une unité de modulation d'intensité 124, les signaux de contrôle $R_{n1}$ et $R_{n2}$ résultants correspondant alors à des signaux de faibles intensités lumineuses.

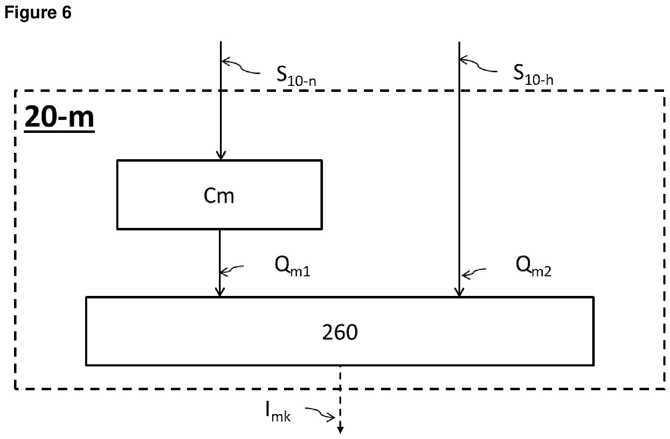

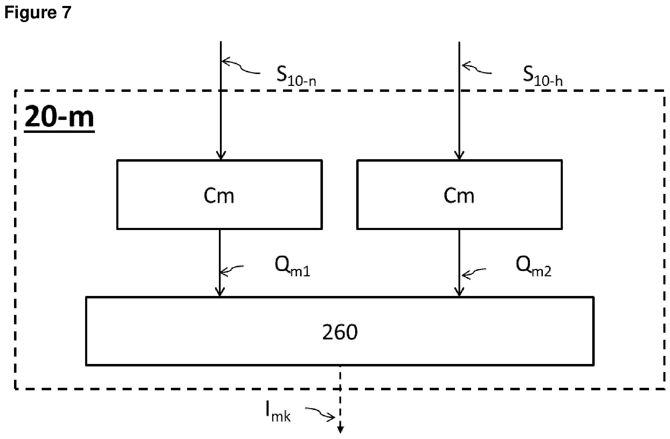

Les figures 6 et 7 représentent schématiquement un récepteur intermédiaire 20-m comprenant au moins une chaîne de traitement de signal optique multiplexé reçu, et un module de corrélation 260, selon des modes de réalisation.

Le module de corrélation 260 d'un récepteur intermédiaire 20-m est configuré pour effectuer une mesure corrélée d'un premier signal quantique reçu $Q_{m1}$ issu d'un premier émetteur 10-n, avec un deuxième signal quantique reçu $Q_{m2}$ issu d'un deuxième émetteur 10-h.

En particulier, le module de corrélation 260 peut être implémenté sous la forme d'un instrument optique, de type interféromètre optique par exemple, pour effectuer une mesure de Bell (correspondant à un module de mesure de Bell). Un tel module de corrélation 260 comprend notamment une pluralité d'unités de détection. Chaque unité de détection peut être adaptée pour mesurer un ou plusieurs signaux quantiques selon un état de polarisation de mesure prédéfini, par exemple, dans une base de polarisation $B_{260}$ (appelée également 'base de polarisation de mesure' et correspondant par exemple et sans limitations à une base H/V ou à une base D/A).

Une chaîne de traitement d'un récepteur intermédiaire 20-m, notée Cm, est configuré pour recevoir un signal optique multiplexé et délivrer un signal quantique reçu $Q_m$. Par exemple, comme représenté sur les figures 6 et 7, une chaîne de traitement Cm peut être configurée pour recevoir le signal optique multiplexé $S_{10-n}$ ou $S_{10-n1}$)

transmis par un premier émetteur 10-n et délivrer le premier signal quantique reçu $Q_{m1}$ associé au signal $Q_n$ (ou $Q_{n1}$) transmis par le premier émetteur 10-n via le signal $S_{10-n}$.

Une chaîne de traitement Cm est en outre adaptée pour déterminer l'état de polarisation du ou des signaux de contrôle issus du signal optique multiplexé reçu. Par exemple, la chaîne de traitement Cm peut être associée à la première base de polarisation de contrôle $B_{Q-n1}$ et être adaptée pour mesurer dans cette base l'état de polarisation du premier signal de contrôle $R_{n1}$ transmis par le premier émetteur 10-n via le signal optique multiplexé $S_{10-n}$. La chaîne de traitement Cm peut en outre être associée à la deuxième base de polarisation de contrôle $B_{Q-n2}$ et être adaptée pour mesurer dans cette deuxième base l'état de polarisation du deuxième signal de contrôle $R_{n2}$ transmis par le premier émetteur 10-n via le signal optique multiplexé $S_{10-n}$.

Une chaîne de traitement Cm est en outre adaptée de manière à aligner un état de polarisation déterminé avec un des états de polarisation de mesure prédéfini du module de corrélation 260. Dans des modes de réalisation, la base de polarisation de mesure $B_{260}$ peut correspondre à la première base de polarisation de contrôle $B_{Q-n1}$. Alternativement, la base de polarisation de mesure $B_{260}$ peut correspondre ou à la deuxième base de polarisation de contrôle de contrôle $B_{Q-n2}$. Tel qu'utilisé ici, l'expression 'alignement d'un état de polarisation sur une base de polarisation' fait référence à une rotation de l'état de polarisation du signal pour qu'il corresponde à un axe propre de détection de la base déterminée par un équipement de détection du signal quantique.

Ainsi, une chaîne de traitement Cm d'un récepteur intermédiaire 20-m peut être adaptée pour effectuer une rotation de l'état de polarisation de l'ensemble des signaux issus du signal optique multiplexé reçu, en entrée de la chaîne de traitement Cm, pour assurer que les particules du signal quantique $Q_m$ en sortie de la chaîne de traitement Cm soient alignées à la base de polarisation de mesure $B_{260}$ .

Dans des modes de réalisation, comme représenté sur la figure 7, un récepteur intermédiaire 20-m peut comprendre deux chaînes de traitement Cm configurées pour traiter chacune soit le signal optique multiplexé $S_{10-n}$ transmis par le premier émetteur 10-n, soit le signal optique multiplexé $S_{10-h}$ transmis par le deuxième émetteur 10-h.

Dans d'autres modes de réalisation, un récepteur intermédiaire 20-m peut comprendre une unique chaîne de traitement Cm configurée pour traiter le signal optique multiplexé $S_{10-n}$ transmis par le premier émetteur 10-n, comme représenté sur la figure 6. Dans ce cas, le signal optique d'émission $S_{10-h}$ transmis par le deuxième émetteur 10-h n'est par un signal multiplexé et comprend uniquement un signal quantique $Q_h$, correspondant directement au deuxième signal quantique reçu $Q_{m2}$ issu d'un deuxième émetteur 10-h.

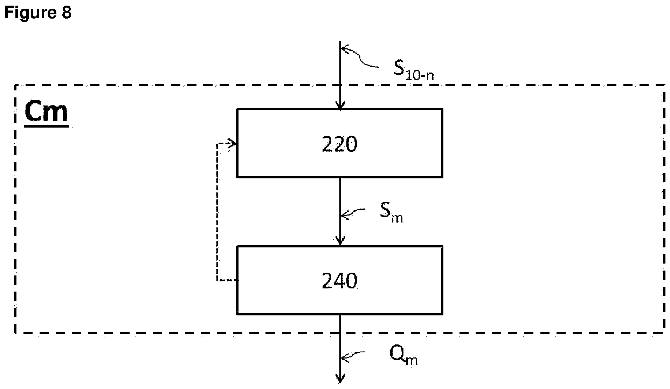

Avantageusement, une chaîne de traitement Cm peut comprendre une boucle d'asservissement entre un module de correction 220 d'état de polarisation et un module de détection 240 d'un signal de contrôle. Comme représenté sur la figure 8, le module de correction 220 peut être agencé en amont du module de détection 240.

Un module de correction 220 d'un récepteur intermédiaire 20-m peut être configuré pour modifier la polarisation d'un signal le traversant, en réponse à un signal de consigne. Le module de correction 220 peut donc être configuré pour recevoir un signal optique multiplexé (par exemple $S_{10-n}$, ou plus précisément $S_{10-n1}$, transmis par un premier émetteur 10-n) et délivrer un signal optique multiplexé à polarisation modifiée, noté $S_m$.

Le signal de consigne du module de correction 220 peut être un signal électrique ou radiofréquence par exemple. Avantageusement, un module de correction 220 peut être un contrôleur de polarisation fibré comprenant notamment une ou plusieurs fibres à rotation de polarisation dont le ou les axes de contrainte (adaptés pour faire tourner la polarisation du signal) sont contrôlés (ou ajustés) à partir du signal de consigne. Par exemple et sans limitation, un tel axe de contrainte contrôlable peut être implémenté sous la forme d'un composant fibré enroulé de géométrie ajustable, ou à l'aide d'un élément piézoélectrique induisant des contraintes mécaniques sur une fibre. Alternativement, un module de correction 220 peut comprendre une ou plusieurs lames à retard dites actives, c'est à dire dont la rotation de lame (c'est-à-dire de son axe optique) est contrôlée (ou ajustée) à partir du signal de consigne. Le module de correction 220 peut être, par exemple et sans limitation, un triplé de lames à retard actives comprenant successivement une lame quart d'onde, une lame demi-onde et une lame quart d'onde.

Dans des modes de réalisation, les moyens de transmission d'un récepteur intermédiaire 20-m, et en particulier d'une chaîne de traitement Cm, peuvent être des fibres optiques monomodes SMF, et/ou avantageusement, des fibres à maintien de polarisation PMF.

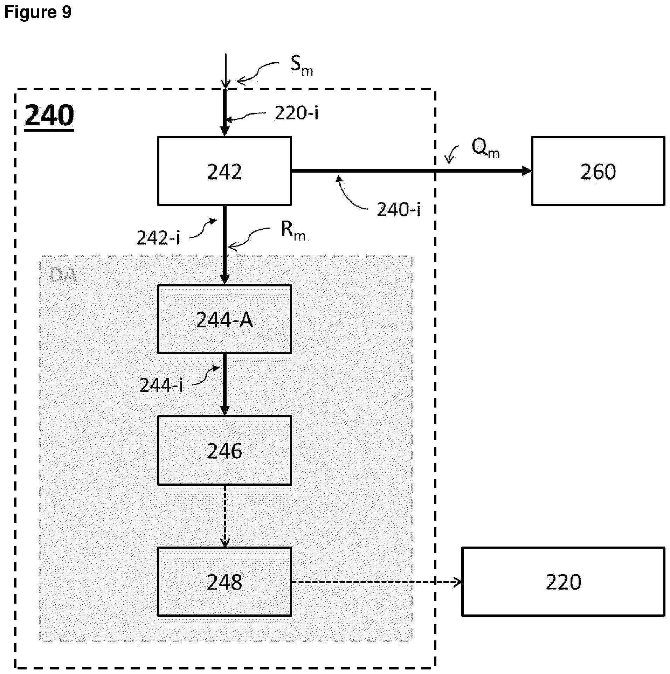

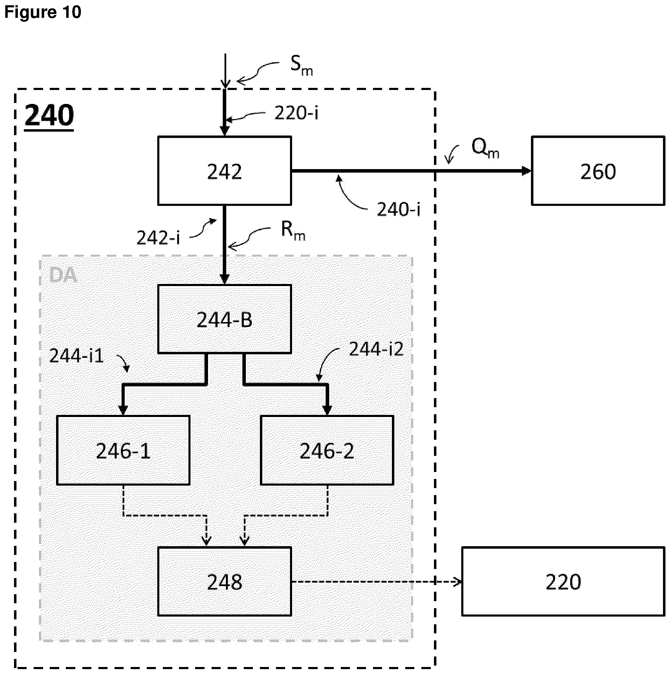

Les figures 9 et 10 représentent schématiquement un module de détection 240 d'une chaîne de traitement Cm comprenant une unité de démultiplexage de signaux 242 et un dispositif d'analyse DA de polarisation du signal de contrôle, selon des modes de réalisation de l'invention.

L'unité de démultiplexage de signaux 242 peut recevoir en entrée le signal optique multiplexé à polarisation modifiée $S_m$ et peut être configuré pour séparer de ce signal, une composante de signal quantique reçu $Q_m$ relative au signal quantique issu du signal multiplexé reçu, et respectivement une ou deux composantes de signal de contrôle reçu $R_m$ relatives au signal ou aux signaux de contrôle issus du signal multiplexé reçu. Par exemple pour un signal optique multiplexé $S_{10-n}$ reçu transmis par un premier émetteur 10-n et comprenant le signal quantique $Q_n$ (ou $Q_{n1}$) et le signal de contrôle

$R_{n1}$, l'unité de démultiplexage 242 peut être configurée pour déterminer la composante quantique de signal $Q_m$ relative au signal quantique $Q_{n1}$ et la composante de contrôle de signal $R_m$ relative au signal de contrôle $R_{n1}$.

La composante quantique $Q_m$ démultiplexée du signal $S_m$ en sortie de l'unité 242 peut alors être acheminée au module de corrélation 260 du récepteur intermédiaire 20-m, tandis que la composante de contrôle $R_m$ peut être acheminée à un dispositif d'analyse DA.

Dans des modes de réalisation où le signal optique multiplexé $S_{10-n}$ reçu comprend le signal quantique $Q_{n1}$ et les deux signaux de contrôle $R_{n1}$ et $R_{n2}$, l'unité de démultiplexage 242 peut être configurée pour séparer la composante quantique $Q_m$ relative au signal quantique $Q_{n1}$, une première composante de contrôle de signal $R_{m1}$ relative au premier signal de contrôle $R_{n1}$ et une deuxième composante de contrôle de signal $R_{m2}$ relative au deuxième signal de contrôle $R_{n2}$. Dans ce cas, la première composante de contrôle $R_{m1}$ peut être acheminée vers un premier dispositif d'analyse, tandis que la deuxième composante de contrôle $R_{m2}$ peut être acheminée vers un deuxième dispositif d'analyse (non représenté sur les figures). Les deux dispositifs d'analyse sont configurés de manière analogue, chacun étant adapté aux caractéristiques de la composante de contrôle à traiter, c'est-à-dire à la base de polarisation de contrôle ($B_{Q-n1}$ et $B_{Q-n2}$) à utiliser et optionnellement à la longueur d'onde de référence considérée. L'utilisation de deux dispositifs d'analyse distincts permet d'obtenir une meilleure estimation des rotations (ou distorsions) de polarisation subies par le signal optique multiplexé $S_{10-n}$ entre l'émission et la réception sur le canal de transmission. Par exemple et sans limitation, le deuxième dispositif d'analyse peut être utilisé pour confirmer l'analyse de polarisation du signal de contrôle déterminée par le premier dispositif d'analyse.

Dans des modes de réalisation impliquant un multiplexage temporel où le signal optique multiplexé $S_{10-n}$ reçu comprend le signal quantique $Q_{n1}$ et les deux signaux de contrôle $R_{n1}$ et $R_{n2}$, la première et la deuxième composante de contrôle de signal $R_{m1}$ et $R_{m2}$ démultiplexées peuvent être acheminées vers un unique dispositif d'analyse, configuré pour analyser de manière alternée ces composantes en fonction de la différence temporelle entre les impulsions distinctes successives associées aux signaux de contrôle.

L'unité de démultiplexage 242 d'un module de détection 240 peut notamment comprendre un ou plusieurs éléments de démultiplexage déterminés en fonction du type de multiplexage du signal par l'émetteur considéré, c'est-à-dire fréquentiel et/ou temporel.

Dans des modes de réalisation où le signal multiplexé reçu est multiplexé fréquentiellement, l'unité de démultiplexage 242 peut comprendre au moins un filtre configuré pour séparer la composante quantique $Q_m$ d'une composante de contrôle $R_m$. Par exemple et sans limitation, un tel filtre peut être un filtre de rejet de bande tel qu'un filtre FBG (acronyme pour l'expression anglo-saxonne *Fiber Bragg Grating*) ou un filtre appelé « Add/Drop WDM ». Le filtre peut être choisi à partir de la différence fréquentielle prédéterminée entre la longueur d'onde quantique $\lambda_Q$ et une longueur d'onde de référence ($\lambda_{R1}$ et/ou $\lambda_{R2}$), définie par exemple par l'équation (01).

Dans des modes de réalisation, l'unité de démultiplexage 242 peut en outre comprendre un filtre configuré pour séparer des composantes de contrôle entre elles. Un tel filtre peut être choisi à partir de la différence fréquentielle prédéterminée entre les longueurs d'onde de référence $\lambda_{R1}$ et $\lambda_{R2}$ de chacun des signaux de contrôle, et définie par exemple par l'équation (02).

Les moyens de transmission 240-i et 242-i en sortie de l'unité de démultiplexage 242 vers le module de corrélation 280 et le dispositif d'analyse DA respectivement, ainsi que des moyens de transmission inclus dans l'unité 242 (non représentés sur les figures), peuvent être des fibres optiques monomodes SMF. Avantageusement, ces moyens de transmission peuvent être des fibres à maintien de polarisation PMF.

Un dispositif d'analyse DA de polarisation du signal de contrôle d'une chaîne de traitement Cm peut être configuré pour détecter la composante de contrôle $R_m$ à traiter, selon une base de polarisation prédéfinie, de manière à fournir un signal de contrôle estimé.

Il est à noter qu'en sortie d'un émetteur 10-n, un signal de contrôle ($R_{n1}$ et/ou $R_{n2}$) est caractérisé par son état de polarisation bien défini. Au cours de la propagation d'un signal multiplexé entre l'émetteur 10-n et un récepteur intermédiaire 20-m, l'état de polarisation du signal de contrôle considéré peut avoir subi des rotations aléatoires de sorte que l'état de polarisation de la composante de contrôle $R_m$ reçue et détectée, relative au signal de contrôle considéré, peut être différent de l'état de polarisation initialement défini.

Ainsi, le dispositif d'analyse DA de polarisation de signal de contrôle peut comprendre au moins une unité de détection configurée pour détecter le signal de contrôle considéré, notamment selon une polarisation prédéfinie, de manière à fournir l'estimation du signal de contrôle reçu (par exemple $R_{mn1}$, ou $R_{mn2}$ respectivement).

Dans des modes de réalisation, une unité de détection du dispositif d'analyse DA peut être adaptée pour détecter des signaux d'impulsions lumineuses classiques. Par exemple et sans limitation, une telle unité peut être une photodiode configurée pour délivrer un photo-courant, en fonction de la mesure de la composante de signal de contrôle reçu associée à la chaîne de traitement Cm.

Alternativement, une unité de détection du dispositif d'analyse DA peut être une unité de détection de photons uniques. Une telle unité peut être composée d'une surface de détection configurée pour détecter la « présence » de photons uniques au niveau de sa surface de détection (i.e. par interaction photon/surface). Cette détection de la présence de photons uniques est définie selon une efficacité quantique de détection donnée. Par exemple et sans limitation, l'unité de détection de photons uniques peut être une photodiode à avalanche ou APD (acronyme pour l'expression anglo-saxonne correspondante *Avalanche Photodiode Detector*) ou encore un détecteur de photons uniques à nanofil supraconducteur ou SNSPD (acronyme pour l'expression anglo-saxonne correspondante *Superconducting Nanowire Single Photon Detector*). En particulier, l'unité de détection de photons uniques peut comprendre un mécanisme d'amplification interne configuré pour délivrer une tension, lorsque qu'un photon est détecté.

Dans certains modes de réalisation, comme représenté sur la figure 9, le dispositif d'analyse DA peut comprendre un polariseur 244-A et une unique unité de détection 246 de la composante de contrôle $R_m$ associée au signal de contrôle considéré, par exemple $R_{n1}$ (ou $R_{n2}$). Le polariseur 244-A (encore appelé 'filtre polarisant') peut être agencé pour transmettre à l'unité de détection 246 uniquement les signaux optiques définis dans un état de polarisation prédéfini. L'unité de détection 246 est ainsi configurée pour détecter l'énergie lumineuse relative à la composante de contrôle $R_m$ définie uniquement selon l'état de polarisation considéré (i.e. de la base de polarisation prédéfinie traitée par le dispositif d'analyse DA), et pour fournir l'estimation du signal de contrôle reçu, par exemple $R_{mn1}$ (ou $R_{mn2}$ respectivement). Selon cette configuration, la valeur du signal de contrôle détectée (ou mesurée) par l'unité de détection 246 est maximale si l'état de polarisation de la composante de signal de contrôle reçu est égale à l'état de polarisation prédéfini. Inversement, la valeur du signal de contrôle détectée peut être minimale si l'état de polarisation de la composante de signal de contrôle reçu est orthogonal par rapport à l'état de polarisation prédéfini.

Avantageusement, le dispositif d'analyse DA peut comprendre une unité de détection polarisante regroupant directement (i.e. combinant) les fonctionnalités du polariseur 244-A et de l'unité de détection 246.

Dans des modes de réalisation, comme représenté sur la figure 10, le dispositif d'analyse DA peut comprendre une unité de séparation 244-B de faisceaux polarisés, précédée de deux unités de détection 246-1 et 246-2 distinctes. L'unité de séparation 244-B de faisceaux polarisés (encore appelé 'séparateur polarisant') peut être adaptée pour fournir deux sous-composantes polarisées de signal relative à la composante de contrôle $R_m$ considérée. Chaque sous-composante peut se propager sur un moyen de transmission (244-i1 ou 244-i2) en sortie de l'unité de séparation 244-B vers une des deux unités de détection (246-1 ou 246-2) alors définie uniquement dans un des deux états de polarisation de la base de polarisation prédéfinie traitée par le dispositif d'analyse DA). Chaque unité de détection (246-1 et 246-2) est ainsi configurée pour détecter l'énergie lumineuse relative à une des deux sous-composantes polarisées de la composante de contrôle $R_m$ pour fournir

l'estimation du signal de contrôle reçu. Par exemple et sans limitation, selon cette configuration, la valeur relative au signal de contrôle estimé, mesurée par la première unité de détection 246-1, peut être maximale, et la valeur mesurée par la deuxième unité de détection 246-2 peut être minimale, si l'état de polarisation de la composante de contrôle $R_m$ est égale à l'état de polarisation initial du signal de contrôle considéré émis par l'émetteur. Inversement, la valeur relative au signal de contrôle estimé, mesurée par la première unité de détection 246-1, peut être minimale et la valeur mesurée par la deuxième unité de détection 246-2 peut être maximale, si l'état de polarisation de la composante de contrôle $R_m$ est orthogonal à l'état de polarisation initial du signal de contrôle considéré émis par l'émetteur.

Par exemple et sans limitation, un dispositif DA d'analyse de polarisation d'un composante de contrôle $R_m$ reçu associé à la base diagonale H/V peut comprendre une unité de séparation 244-B configurée pour fournir une première sous-composante ayant une polarisation linéaire de type H se propageant sur le moyen de transmission 244-i1, et une deuxième sous-composante ayant une polarisation linéaire de type V se propageant sur le moyen de transmission 244-i2. Dans cet exemple, les deux unités de détection 246-1 et 246-2 correspondantes sont donc configurées pour détecter respectivement la sous-composante relative à la polarisation linéaire de type H de la composante de contrôle $R_m$ et la sous-composante relative à la polarisation linéaire de type V de la composante de contrôle Rm.

Dans certains modes de réalisation, la ou les unités de détection (246, ou 246-1 et 246-2) d'un dispositif d'analyse DA peuvent être adaptées à la longueur d'onde de référence $\lambda_{Rx}$ (i.e. $\lambda_{R1}$ ou $\lambda_{R2}$) de la composante de contrôle $R_m$ à détecter.

Le récepteur intermédiaire 20-m peut en outre comprendre un ou plusieurs processeurs (encore appelés 'unités centrales de calcul') ou CPU (acronyme pour l'expression anglo-saxonne *Central Processing Unit)*.

Dans des modes de réalisation, chaque dispositif d'analyse DA du récepteur 20-m peut comprendre un processeur spécifique, généralement noté 248, configuré pour analyser le ou les signaux électriques issus de la ou des unités de détection (246, ou 246-1 et 246-2) correspondant au signal de contrôle estimé, associé au dispositif d'analyse DA. Un processeur 248 peut être configuré pour générer un signal d'asservissement, noté $S_C$, correspondant à un signal de consigne de correction de polarisation à délivrer au module de correction 220 associé à la chaîne de traitement Cm.

Dans certains modes de réalisation, le récepteur intermédiaire 20-m peut comprendre un unique processeur 248, configuré pour analyser l'ensemble des signaux électriques issus des unités de détection des dispositifs d'analyse du récepteur 20-m. Dans ce cas, le processeur 248 peut être configuré pour générer un signal d'asservissement $S_C$ spécifique à chaque module de correction 220 d'une chaîne de traitement Cm.

Une boucle d'asservissement d'une chaîne de traitement Cm (i.e. boucle de correction de polarisation générant un signal d'asservissement) peut être mise en oeuvre de manière continue ou de manière intermittente. Un processeur 248 peut ainsi être configuré pour contrôler la ou les boucles d'asservissement du récepteur intermédiaire 20-m. En particulier, une boucle d'asservissement peut être activée de manière périodique et/ou après évaluation de l'état de polarisation d'un ou des deux signaux de contrôle estimés par rapport à un ou plusieurs états de polarisation de base(s) de polarisation associée(s). Par ailleurs, une boucle d'asservissement peut être mise en oeuvre jusqu'à alignement de l'état de polarisation d'un ou des deux signaux de contrôle estimés sur un état de polarisation choisi (ou de référence) associé et/ou dans une base de polarisation choisie.

Dans des modes de réalisation, un processeur 248 du récepteur intermédiaire 20-m peut être configuré pour déterminer pour un dispositif de correction D spécifique une valeur de différence d'état de polarisation $\delta P$ entre l'état de polarisation du signal de contrôle estimé considéré et l'état de polarisation de la base de polarisation associée au dispositif de correction D. Le processeur 248 peut en outre être configuré pour évaluer si cette valeur de différence d'état de polarisation $\delta P$ est strictement supérieure (ou supérieur ou égale) à une valeur de différence de référence $\delta P_{ref}$ prédéfinie.

En particulier, une boucle d'asservissement peut être activée si une valeur différence d'état de polarisation $\delta P$ déterminée est supérieure ou égale à la valeur de différence de référence $\delta P_{ref}$.

Avantageusement, une boucle d'asservissement peut être mise en oeuvre de manière à optimiser (c'est-à-dire maximiser ou minimiser) la détection de la composante du ou des signaux de contrôle selon le ou les états de polarisation associés.

Par exemple et sans limitation, un signal d'asservissement d'une boucle d'asservissement peut être généré à partir d'un algorithme d'optimisation différentiable, tel qu'un algorithme de descente du gradient, de manière à rechercher (par incrémentation ou itération) un point optimal d'une fonction objective associée notamment à la valeur de différence d'état de polarisation déterminée d'un dispositif de correction D du récepteur 20-m. Si un point optimal est trouvé, la boucle d'asservissement peut être arrêtée.

La boucle d'asservissement peut également être arrêtée, par exemple et sans limitation, si une valeur différence d'état de polarisation $\delta P$ déterminée est évaluée strictement inférieure (ou inférieure ou égale) à la valeur de différence de référence $\delta P_{ref}$.

Ainsi, dans des modes de réalisation, un signal d'asservissement $S_C$ relatif au signal de consigne d'un module de correction 220 peut être généré pour contrôler ce module 220 et notamment faire tourner la polarisation du signal multiplexé reçu jusqu'à ce que la valeur du signal de contrôle estimé, mesurée par l'unité de détection 240 (par exemple via la première unité de détection 246-1), soit optimale, c'est-à-dire que l'état de polarisation de la composante de contrôle $R_m$ soit alors égale à l'état de polarisation initial du signal de contrôle considéré émis par l'émetteur, ou alternativement orthogonale à celle-ci. La modification de la polarisation du signal multiplexé reçu via le signal d'asservissement $S_C$ induit ainsi une modification de l'état de polarisation du signal quantique $Q_m$ démultiplexé du signal $S_m$, en sortie de l'unité 242, et acheminé au module de corrélation 260 du récepteur 20-m.

Par ailleurs, les unités de détection du module de corrélation 260 d'un récepteur intermédiaire 20-m peuvent être des unités de détection de photons uniques. La détection des composantes quantiques, $Q_{m1}$ et $Q_{m2}$, permet de fournir au moins un signal information d'intrication $I_{mk}$ à fournir respectivement à un récepteur final 30-k du troisième ensemble de dispositifs 30 du système 1.

Dans des modes de réalisation, un module de corrélation 260 d'un récepteur intermédiaire 20-m peut comprendre en entrée un ou deux unités de démultiplexage supplémentaire (non représentées sur les figures). Chaque unité de démultiplexage supplémentaire du module de corrélation 260 est associée à une des composantes quantiques, $Q_{m1}$ ou $Q_{m2}$, et peut être équivalente à l'unité de démultiplexage de signaux 242 du module de détection 240 d'une chaîne de traitement Cm, et configuré pour transmettre la composante quantique considérée au module de mesure de Bell par exemple. La ou les composantes résiduelles des signaux de contrôle issues de l'unité de démultiplexage sont alors dirigées vers un absorbeur de faisceau.

L'unité de démultiplexage supplémentaire du module de corrélation 260 peut notamment comprendre un élément de démultiplexage déterminé en fonction du type de multiplexage du signal $S_m$. Par exemple, pour un multiplexage fréquentiel, l'unité de démultiplexage supplémentaire peut être un filtre spectral configuré pour séparer un signal quantique $Q_m$ des deux composantes résiduelles des signaux intégrés, tels qu'un filtre FBG ou un filtre « Add/Drop WDM », et choisi à partir de la différence fréquentielle prédéterminée entre la longueur d'onde quantique $\lambda_Q$ et les longueurs d'onde de référence ($\lambda_{R1}$ et/ou $\lambda_{R2}$).

Une telle unité de démultiplexage supplémentaire dans le module de corrélation 260 permet notamment d'augmenter la capacité de filtrage du ou des signaux de contrôle du ou des signaux multiplexés reçu en entrée du récepteur intermédiaire 20-m, afin d'améliorer la mesure de corrélation quantique effectuée par le module 260.

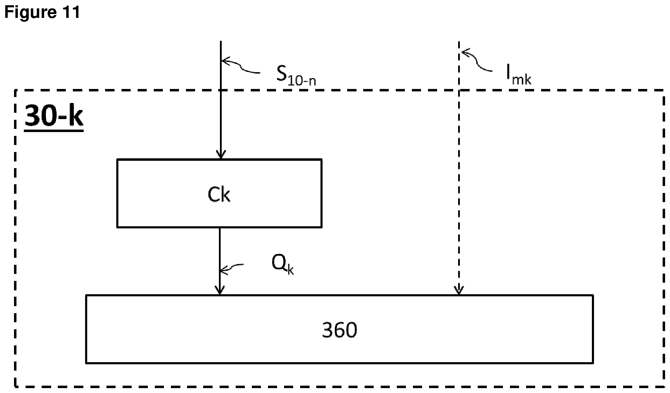

La figure 11 représente schématiquement un récepteur final 30-k comprenant une chaîne de traitement de signal optique multiplexé reçu, et un module d'analyse 360 de photon quantique, selon des modes de réalisation. Dans ce cas, le récepteur final 30-k peut être configuré pour recevoir un signal optique d'émission étant un signal multiplexé $S_{10-n}$ transmis par un émetteur 10-n du premier ensemble de dispositifs 10. Un tel signal peut par exemple être le signal multiplexé $S_{10-n2}$ comprenant un signal quantique $Q_{n2}$ et un premier signal de contrôle $R_{n1}$ et/ou un deuxième signal de contrôle $R_{n2}$.

Une chaîne de traitement d'un récepteur final 30-k, notée Ck, peut être configurée pour recevoir un signal optique multiplexé et délivrer un signal quantique reçu $Q_k$ relatif au signal quantique issu du signal multiplexé $S_{10-n}$. Le module d'analyse 360 de photon quantique d'un récepteur final 30-k peut être adapté pour mesurer le signal quantique reçu, selon au moins un état de polarisation défini dans une base de polarisation.

La chaîne de traitement Ck peut être adaptée pour déterminer l'état de polarisation du ou des signaux de contrôle issus du signal optique multiplexé reçu par le récepteur final 30-k. La chaîne de traitement Ck peut être en outre adaptée de manière à aligner cet état de polarisation déterminé avec un des états de polarisation de mesure prédéfini du module d'analyse 360. Ainsi, la chaîne de traitement Ck peut être adaptée pour effectuer une rotation de l'état de polarisation de l'ensemble des signaux issus du signal optique multiplexé reçu, en entrée de la chaîne de traitement Ck, pour assurer que les particules du signal quantique reçu Ck en sortie de la chaîne de traitement Ck soit bien alignées dans la base de polarisation associée au du module d'analyse 360. La chaîne de traitement Ck peut ainsi être équivalente (comprendre des unités similaires) à une chaîne de traitement Cm d'un récepteur intermédiaire 20-m, comme illustré sur la figure 8.

En particulier, la chaîne de traitement Ck d'un récepteur final 30-k peut comprendre une boucle d'asservissement entre un module de correction d'état de polarisation agencé en amont d'un module de détection de signal de contrôle.

Le module de correction de la chaîne de traitement Ck (équivalent au module de correction 220 d'une chaîne de traitement Cm d'un récepteur 20-m) peut être configuré pour modifier la polarisation d'un signal le traversant, en réponse à un signal de consigne. Le module de correction est donc configuré pour recevoir un signal optique multiplexé $S_{10-n}$ reçu par le récepteur final 30-k (par exemple $S_{10-n2}$ transmis par un premier émetteur 10-n) et délivrer un signal optique multiplexé à polarisation modifiée, noté $S_k$ par exemple.

Le module de détection de la chaîne de traitement Ck (équivalent au module de correction 240 d'une chaîne de traitement Cm d'un récepteur 20-m et (ainsi illustré sur les figures 9 et 10) peut comprendre une unité de démultiplexage de signaux et au moins un dispositif d'analyse de polarisation du signal de contrôle. L'unité de démultiplexage peut être configuré pour séparer le signal optique multiplexé à polarisation modifiée, en au moins une composante de signal quantique reçu $Q_k$ alors acheminée au module d'analyse 360 de photon quantique. Un dispositif d'analyse de polarisation du signal de contrôle, dans la chaîne de traitement Ck, peut être configuré pour traiter une composante de signal de contrôle reçu issue du signal optique multiplexé à polarisation modifiée, notamment pour générer un signal d'asservissement correspondant au signal de consigne de correction de polarisation à délivrer au module de correction de la chaîne de traitement Ck.

Dans des modes de réalisation où un récepteur final 30-k est configuré pour recevoir un signal optique d'émission comprenant uniquement un signal quantique (i.e. non multiplexé), le signal optique d'émission $S_{16-n}$ correspond alors directement au signal quantique reçu $Q_k$ à traiter par le module d'analyse 360.

Le module d'analyse 360 d'un récepteur final 30-k peut comprendre au moins une unité de détection de photons uniques. La détection du signal quantique reçu $Q_k$ permet de fournir le signal quantique reçu estimé $S_{Qk}$ et ainsi une estimation de l'état de polarisation du signal par rapport à un ou plusieurs états de polarisation définis dans une base de polarisation.

Dans certains modes de réalisation, le module d'analyse 360 peut comprendre une unique unité de détection de photons uniques 366 configurée pour détecter le signal quantique reçu $Q_k$ défini selon un état de polarisation prédéterminé.

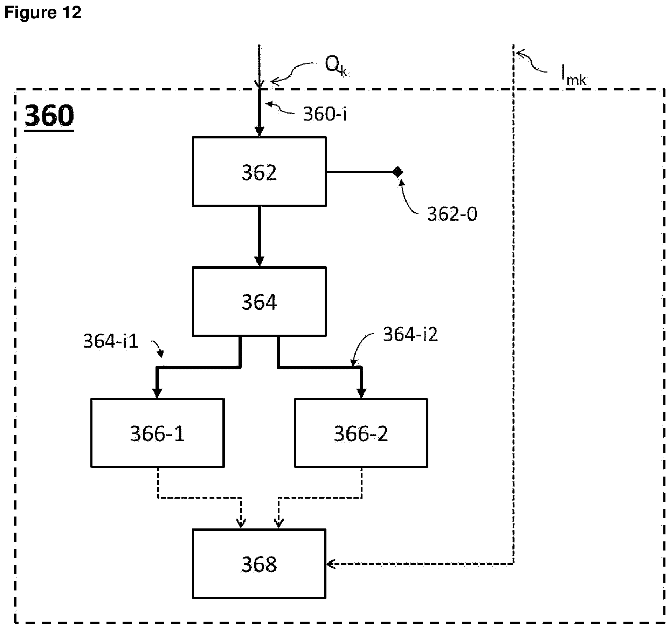

Dans d'autres modes de réalisation, comme représenté sur la figure 12, le module d'analyse 360 peut comprendre une unité de commutation 364, précédée de deux unités de détection de photons uniques 366-1 et 366-2. L'unité de commutation 364 peut être équivalente à l'unité de séparation 244-B de faisceaux polarisés d'un dispositif d'analyse DA compris dans un récepteur intermédiaire 20-m. L'unité de commutation 364 peut donc être adaptée pour diriger (i.e. router ou commuter) le signal quantique $Q_k$ démultiplexé du signal multiplexé $S_{10-n}$ reçu en entrée du récepteur final 30-k vers une des deux unités de détection de photons uniques (366-1 ou 366-2) en fonction de l'état de polarisation du signal quantique. Chaque unité de détection de photons uniques (366-1 et 366-2) est ainsi configurée pour détecter la présence de photons uniques définis selon un des états de polarisation de la base de polarisation, traitée par le module d'analyse 360 (i.e. le récepteur final 30-k considéré)

A titre d'illustration, pour un module d'analyse 360 associé, par exemple et sans limitation, à la base H/V, peut comprendre l'unité de commutation 364 configurée pour diriger le signal quantique reçu $Q_k$ ayant une polarisation linéaire de type horizontal H, vers la première unité de détection de photons uniques 366-1 via le moyen de transmission 364-i1, ou pour diriger le signal quantique reçu $Q_k$ ayant une polarisation de type vertical V, vers la deuxième unité de détection de photons uniques 366-2 via le moyen de transmission 364-i2.

Dans des modes de réalisation où le signal optique d'émission $S_{10-n}$ reçu par le récepteur final 30-k est un signal multiplexé, le module d'analyse 360 peut comprendre en entrée une unité de démultiplexage supplémentaire 362, équivalente à une unité de démultiplexage de signaux 242 d'une chaîne de traitement Cm, ou à une unité de démultiplexage supplémentaire du module de corrélation 260, comprises dans un récepteur intermédiaire 20-m. L'unité de démultiplexage supplémentaire 362 peut ainsi être configurée pour transmettre le signal quantique reçu $Q_k$ à l'unité de détection de photons uniques 366, ou à l'unité de commutation 364, comme représenté sur la figure 12. Les composantes résiduelles des signaux de contrôle sont alors dirigées vers un absorbeur de faisceau 362-0 comme représenté sur la figure 12.

Par ailleurs, le module d'analyse 360 d'un récepteur final 30-k peut comprendre un processeur 368 configuré pour analyser le ou les signaux électriques issus de la ou des unités de détection (366, ou 366-1 et 366-2) correspondant au signal quantique reçu estimé $S_{Qk}$. Le processeur 368 d'un récepteur final 30-k peut être configuré pour déterminer une clé de cryptage quantique, c'est-à-dire une clé partagée avec l'autre par le récepteur final 30-q, à partir du signal quantique reçu estimé $S_{Qk}$ et du signal d'information d'intrication $I_{mk}$ reçu par le récepteur final 30-k.

La détermination d'une clé de cryptage quantique peut être effectuée à partir d'un protocole de distribution quantique de clé, comme par exemple un protocole comparable au protocole nommé BBM92 (comme décrit dans l'article "Quantum cryptography without Bell's theorem" de C. Bennett, G. Brassard et D. Mermin, 1992, Physical Review Letters 68 (5), p. 557-559).

Dans des modes de réalisation, comme par exemple lorsque les signaux de contrôle sont des signaux quantiques et le signal multiplexé reçu par le récepteur final 30-k est un signal multiplexé temporellement, la chaîne de traitement Ck peut être constituée d'un module de correction d'état de polarisation et d'une partie au moins du module d'analyse 360. Dans ce cas, le module 360 configuré détecter le signal quantique reçu $Q_k$, peut être en outre configuré pour détecter un ou plusieurs des signaux de contrôle issus du signal optique multiplexé reçu par le récepteur final 30-k. Dans ce cas, le processeur 368 peut également être configuré pour générer un signal d'asservissement correspondant à un signal de consigne de correction de polarisation à délivrer au module de correction de la chaîne de traitement Ck.

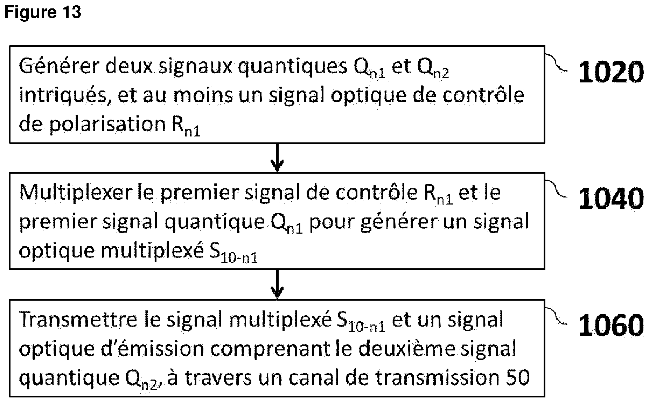

La figure 13 représente le procédé d'émission de signaux optiques mis en oeuvre par un émetteur 10-n, selon des modes de réalisation de l'invention.

Le procédé d'émission de signaux optiques comprend une étape préliminaire 1020 de génération de deux signaux quantiques $Q_{n1}$ et $Q_{n2}$ intriqués, ainsi qu'au moins un signal optique de contrôle de polarisation $R_{n1}$.

A l'étape 1040, le signal optique de contrôle de polarisation $R_{n1}$ est inséré sur le chemin optique transportant le premier signal quantique $Q_{n1}$ intriqué de manière à générer un signal optique multiplexé $S_{10-n1}$.

A l'étape 1060, le signal optique multiplexé $S_{10-n1}$ et un signal optique d'émission comprenant le deu-

xième signal quantique $Q_{n2}$, sont transmis à travers un canal de transmission 50.

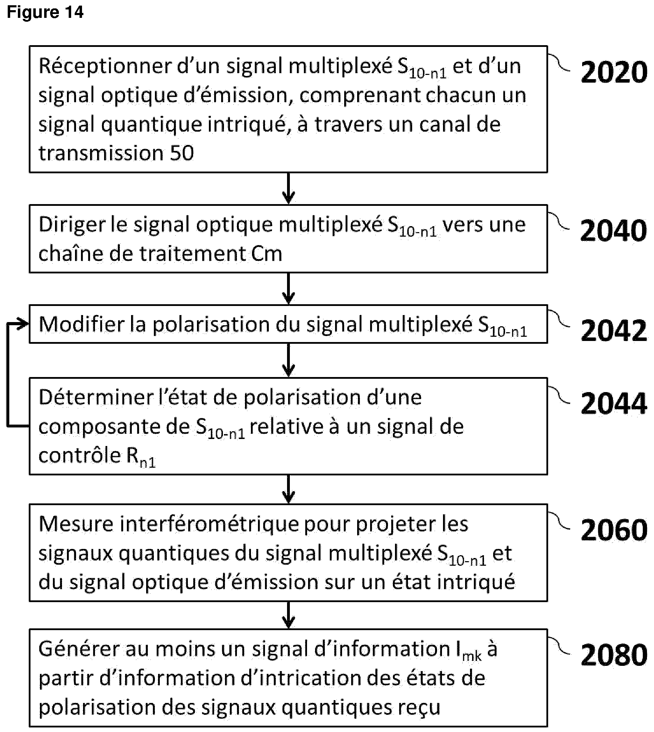

La figure 14 représente le procédé de réception intermédiaire de signaux optiques mis en oeuvre par un récepteur intermédiaire 20-n, selon des modes de réalisation de l'invention.

Le procédé de réception comprend une étape préliminaire 2020 de réception d'un signal optique multiplexé $S_{10-n}$ (ou $S_{10-n1}$) et d'un signal optique d'émission, comprenant chacun un signal quantique intriqué émis indépendamment, respectivement par deux émetteurs distincts, et transmis à travers un canal de transmission 50.

A l'étape 2040, le signal optique multiplexé $S_{10-n1}$ est dirigé vers une chaîne de traitement Cm, associée à une base de polarisation prédéfinie.

Le procédé de réception intermédiaire de signaux optiques comprend en outre, pour la chaîne de traitement Cm, une boucle d'asservissement entre les étapes 2042 et 2044. L'étape 2044 correspond à la détermination de l'état de polarisation d'une composante du signal optique multiplexé reçu parcourant la chaîne et relative à un signal de contrôle $R_{n1}$ émis par le émetteur 10-n, et l'étape 2042 correspond à la modification de la polarisation du signal optique multiplexé reçu en fonction de l'état de polarisation déterminé. La boucle d'asservissement entre les étapes 2042 et 2044 est arrêtée lorsque l'état de polarisation déterminé à l'étape 2044 est aligné par rapport à un des états de polarisation de la base prédéfinie pour la chaîne de traitement Cm.

A l'étape 2060, une mesure interférométrique est effectuée pour projeter sur un état de polarisation intriqué (relative à une base de polarisation de mesure) les particules associées respectivement à la composante quantique du signal optique multiplexé reçu relative au signal quantique $Q_{n1}$ intriqué, et au signal quantique intriqué issu du signal optique d'émission reçu.

A l'étape 2080, au moins un signal d'information $I_{mk}$ est généré à partir d'information d'intrication des états de polarisation déterminés des signaux quantiques reçus, puis transmis à travers un canal de transmission 50.

La figure 14 représente le procédé de réception final de signaux optiques mis en oeuvre par un récepteur final 30-n, selon des modes de réalisation de l'invention.

Dans des modes de réalisation, le procédé de réception final de signaux optiques peut comprendre une étape préliminaire 3020 de réception d'un signal optique multiplexé $S_{10-n}$ (ou $S_{10-n2}$) comprenant un signal quantique intriqué émis par un émetteur, ainsi que d'un signal d'information $I_{mk}$ d'intrication d'état de polarisation de signaux quantique, transmis à travers un canal de transmission 50.

A l'étape 3040, le signal optique multiplexé $S_{10-n2}$ peut être dirigé vers une chaîne de traitement Ck, associée à une base de polarisation prédéfinie.

Le procédé de réception final de signaux optiques peut comprendre en outre, pour la chaîne de traitement Ck, une boucle d'asservissement entre les étapes 3042 et 3044. L'étape 3044 correspond à la détermination de l'état de polarisation d'une composante du signal optique multiplexé reçu parcourant la chaîne et relative à un signal de contrôle $R_{n1}$ émis par le émetteur 10-n, et l'étape 3042 correspond à la modification de la polarisation du signal optique multiplexé reçu en fonction de l'état de polarisation déterminé. La boucle d'asservissement entre les étapes 3042 et 3044 est arrêtée lorsque l'état de polarisation déterminé à l'étape 3044 est aligné par rapport à un des états de polarisation de la base prédéfinie pour la chaîne de traitement Ck.

A l'étape 3060, l'état de polarisation de la composante quantique du signal optique multiplexé reçu relative au signal quantique $Q_{n2}$ intriqué peut être déterminé.

A l'étape 3080, une clé de cryptage quantique, partagée avec d'autre récepteur final 30-q, peut être déterminée à partir de l'état de polarisation de la composante quantique du signal optique multiplexé reçu relative au signal quantique $Q_{n2}$ intriqué et de l'information d'intrication des états de polarisation des signaux quantiques issu du signal d'information $I_{mk}$.

L'homme du métier comprendra aisément que certaines étapes des procédés d'émission et de réception peuvent être réalisées respectivement de manière simultanée, séquentielle, indépendante ou non, et/ou selon un ordre différent, par exemple selon un ordre défini par un émetteur et un récepteur considérés.

Le système quantique ou les sous-systèmes du système (émetteurs et récepteurs), ainsi que les procédés décrits précédemment, selon les modes de réalisation de l'invention, peuvent être mis en oeuvre de diverses manières par matériel (« hardware »), ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un système informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différents modules des émetteurs et récepteurs du système quantique décrits à titre d'exemple non limitatif.

**Revendications**

1. Récepteur (20-m) configuré pour recevoir un signal optique multiplexé ($S_{10-n}$) et un signal optique ($S_{10-h}$) transmis indépendamment à travers un canal de transmission (50), ledit signal optique multiplexé ($S_{10-n}$) comprenant un premier signal quantique ($Q_n$), ledit signal optique ($S_{10-h}$) comprenant un deuxième signal quantique ($Q_h$), ledit signal optique multiplexé ($S_{10-n}$) comprenant en outre au moins un signal ($R_{n1}$) de contrôle d'état de polarisation, ledit récepteur (20-m) comprenant une chaîne de traitement (Cm) associée à une base de polarisation composée d'au moins un état de polarisation et adaptée pour déterminer l'état de polarisation dudit au moins un signal ($R_{n1}$) de contrôle d'état de polarisation et pour modifier la polarisation dudit signal optique multiplexé ($S_{10-n}$) de manière à aligner ledit état de polarisation déterminé par rapport à un desdits au moins un état de polarisation de ladite base associée, ledit récepteur (20-m) comprenant en outre un module de corrélation (260) adapté pour effectuer une mesure de corrélation entre ledit premier signal quantique ($Q_{n1}$) issu dudit signal optique multiplexé ($S_{10-n}$) à polarisation modifiée et ledit deuxième signal quantique ($Q_h$), ledit module de corrélation (260) étant associé à ladite base de polarisation, ledit module de corrélation (260) étant en outre adapté pour générer au moins un signal d'information ($I_{mk}$) à partir de ladite mesure de corrélation, ledit signal d'information ($I_{mk}$) comprenant des informations d'intrication des états de polarisation desdits premier et deuxième signaux quantiques ($Q_n$, $Q_h$).

2. Récepteur (20-m), selon la revendication 1, dans lequel ladite chaîne de traitement (Cm) comprend un module de détection de signal de contrôle (240) et un dispositif d'analyse, le module de détection de signal de contrôle (240) étant configuré pour démultiplexer ledit au moins un signal de contrôle ($R_{n1}$) et ledit premier signal quantique ($Q_n$) à partir dudit signal optique multiplexé ($S_{10-n}$), ledit module de détection (240) étant en outre configuré pour acheminer ledit signal de contrôle ($R_{n1}$) démultiplexé vers le dispositif d'analyse (DA) de polarisation, le dispositif d'analyse (DA) de polarisation comprenant au moins une unité de détection (246) adaptée pour détecter ledit signal de contrôle ($R_{n1}$) selon un desdits au moins un état de polarisation de ladite base associée.

3. Récepteur (20-m), selon la revendication 2, dans lequel ledit module de détection (240) comprend en outre un processeur (248) configuré pour analyser ledit état de polarisation déterminé et pour générer un signal d'asservissement ($S_C$) appliqué à un module de correction (220) de polarisation dudit signal optique multiplexé ($S_{10-n}$).

4. Récepteur (20-m), selon d'une des revendications 1 à 3, dans lequel ledit récepteur (20-m) est formé à partir de fibres à maintien de polarisation (PMF) et/ou de fibres optiques monomodes (SMF).

5. Emetteur (10-n) configuré pour émettre des signaux optiques comprenant :

   - un générateur de signaux (120) configuré pour générer un premier signal quantique ($Q_{n1}$), un deuxième signal quantique ($Q_{n2}$), et un signal ($R_{n1}$) de contrôle d'état de polarisation, ledit premier signal quantique ($Q_{n1}$) et ledit deuxième signal quantique ($Q_{n2}$) étant des signaux quantiques intriqués entre eux,
   - un intégrateur de signal (140) configuré pour générer un signal optique multiplexé ($S_{10-n1}$), le signal multiplexé comprenant ledit premier signal de contrôle ($R_{n1}$) et ledit premier signal quantique ($Q_{n1}$),

   ledit émetteur (10-n) étant configuré pour transmettre à travers un canal de transmission (50), ledit signal optique multiplexé ($S_{10-n1}$) et un signal optique ($S_{10-n2}$) comprenant ledit deuxième signal quantique ($Q_{n2}$).

6. Système (1) de communication quantique comprenant une pluralité d'émetteurs (10-n) selon la revendication 5, et au moins un récepteur (20-m) selon l'une des revendications 1 à 4.

7. Système (1), selon la revendication 6, dans lequel ladite pluralité d'émetteurs comprend au moins un premier émetteur et un deuxième émetteur, et ledit système (1) comprend en outre une pluralité de récepteurs auxiliaires comprenant un premier récepteur auxiliaire (30-1) configuré pour recevoir un signal optique ($S_{10-n}$) comprenant un signal quantique ($Q_n$) transmis par le premier émetteur (10-n), et un deuxième récepteur auxiliaire (30-2) configuré pour recevoir un signal optique ($S_{10-h}$) comprenant un signal quantique ($Q_h$) transmis par le deuxième émetteur (10-h), chaque récepteur auxiliaire (30-1 ; 30-2) étant associé à une base de polarisation de mesure composée d'au moins un état de polarisation et adaptée pour mesurer ledit signal quantique associé ($Q_n$ ; $Q_h$) selon au moins desdits au moins un état de polarisation de ladite base de polarisation de mesure associée, et dans lequel chaque récepteur auxiliaire (30-1, 30-2) est configuré pour recevoir un signal d'information d'intrication ($I_{m1}$ ; $I_{m2}$ ou $I_{p2}$) comprenant des informations d'intrication d'états de polarisation de signaux quantiques transmis par ledit au moins un récepteur (20-m ; 20-p), chaque récepteur auxiliaire (30-1 ; 30-2) étant configuré pour déterminer une clé de cryptage quantique partagée à partir de ladite mesure dudit

signal quantique associé ($Q_n$ ; $Q_h$) et desdites informations d'intrication d'états de polarisation de signaux quantiques.

8. Système (1), selon la revendication 7, dans lequel, pour un ou les deux récepteurs auxiliaires (30-1, 30-2), ledit signal optique ($S_{10-n}$ ; $S_{10-h}$) reçu par ledit récepteur auxiliaire (30-1 ; 30-2) est un signal optique multiplexé comprenant en outre un signal ($R_{n1}$) de contrôle d'état de polarisation, le ou lesdits récepteurs auxiliaires (30-1 ; 30-2) comprenant une chaîne de traitement ($Ck$) associée à ladite base de polarisation de mesure et adaptée pour déterminer l'état de polarisation dudit signal de contrôle ($R_{n1}$) d'état de polarisation et pour modifier la polarisation dudit signal optique multiplexé ($S_{10-n}$; $S_{10-h}$) de manière à aligner ledit état de polarisation déterminé par rapport à un desdits au moins un état de polarisation de ladite base de polarisation de mesure associée.

9. Système (1), selon l'une des revendications 6 à 8, dans lequel lesdits signaux multiplexés sont des signaux multiplexés fréquentiellement.

10. Système (1), selon la revendication 9, dans lequel la valeur absolue de la différence de longueur d'onde entre la longueur d'onde quantique ($\lambda_Q$) d'un signal quantique et la longueur d'onde de référence ($\lambda_R$) d'un signal de contrôle est supérieure ou égale à une valeur minimale de différence de longueur d'onde ($\delta\lambda$).

11. Procédé pour déterminer au moins un signal d'information en réponse à la réception d'un signal optique multiplexé ($S_{10-n}$) et d'un signal optique ($S_{10-h}$) transmis indépendamment à travers un canal de transmission (50), ledit signal optique multiplexé ($S_{10-n}$) comprenant un premier signal quantique ($Q_n$), ledit signal optique ($S_{10-h}$) comprenant un deuxième signal quantique ($Q_h$), ledit signal optique multiplexé ($S_{10-n}$) comprenant en outre au moins un signal ($R_{n1}$) de contrôle d'état de polarisation, ledit procédé comprenant une phase de traitement ($Cm$), associée à une base de polarisation composée d'au moins un état de polarisation, pour déterminer l'état de polarisation dudit au moins un signal ($R_{n1}$) de contrôle d'état de polarisation et pour modifier la polarisation dudit signal optique multiplexé ($S_{10-n}$) de manière à aligner ledit état de polarisation déterminé par rapport à un desdits au moins un état de polarisation de ladite base associée, le procédé comprenant en outre un étape de corrélation comprenant une mesure de corrélation entre ledit premier signal quantique ($Q_{n1}$) issu dudit signal optique multiplexé ($S_{10-n}$) à polarisation modifiée et ledit deuxième signal quantique ($Q_h$), ladite mesure de corrélation étant associée à ladite base de polarisation, ladite étape de corrélation (260) comprenant en outre la génération dudit au moins un signal d'information ($I_{mk}$) à partir de ladite mesure de corrélation, ledit signal d'information ($I_{mk}$) comprenant des informations d'intrication des états de polarisation desdits premier et deuxième signaux quantiques ($Q_n$, $Q_h$).

**Figure 1**

**Figure 2**

**Figure 3**

**Figure 4**

**Figure 5**

**Figure 6**

$$S_{10-n} \qquad\qquad S_{10-h}$$

**20-m**

$$Cm$$

$$Q_{m1} \qquad\qquad Q_{m2}$$

$$260$$

$$I_{mk}$$

**Figure 7**

Figure 8

$S_{10\text{-}n}$

Cm

220

$S_m$

240

$Q_m$

**Figure 9**

**Figure 10**

**Figure 11**

$S_{10-n}$

$I_{mk}$

**30-k**

Ck

$Q_k$

360

**Figure 12**

**Figure 13**

Générer deux signaux quantiques $Q_{n1}$ et $Q_{n2}$ intriqués, et au moins un signal optique de contrôle de polarisation $R_{n1}$ — **1020**

Multiplexer le premier signal de contrôle $R_{n1}$ et le premier signal quantique $Q_{n1}$ pour générer un signal optique multiplexé $S_{10-n1}$ — **1040**

Transmettre le signal multiplexé $S_{10-n1}$ et un signal optique d'émission comprenant le deuxième signal quantique $Q_{n2}$, à travers un canal de transmission 50 — **1060**

**Figure 14**

Réceptionner d'un signal multiplexé $S_{10-n1}$ et d'un signal optique d'émission, comprenant chacun un signal quantique intriqué, à travers un canal de transmission 50 — **2020**

Diriger le signal optique multiplexé $S_{10-n1}$ vers une chaîne de traitement Cm — **2040**

Modifier la polarisation du signal multiplexé $S_{10-n1}$ — **2042**

Déterminer l'état de polarisation d'une composante de $S_{10-n1}$ relative à un signal de contrôle $R_{n1}$ — **2044**

Mesure interférométrique pour projeter les signaux quantiques du signal multiplexé $S_{10-n1}$ et du signal optique d'émission sur un état intriqué — **2060**

Générer au moins un signal d'information $I_{mk}$ à partir d'information d'intrication des états de polarisation des signaux quantiques reçu — **2080**

**Figure 15**

Réceptionner d'un signal multiplexé $S_{10\text{-}n2}$ et d'un signal d'information $I_{mk}$ d'intrication d'état de polarisation de signaux quantique, à travers un canal de transmission 50 — **3020**

Diriger le signal optique multiplexé $S_{10\text{-}n2}$ vers une chaîne de traitement Ck — **3040**

Modifier la polarisation du signal multiplexé $S_{10\text{-}n2}$ — **3042**

Déterminer l'état de polarisation d'une composante de $S_{10\text{-}n2}$ relative à un signal de contrôle $R_{n1}$ — **3044**

Déterminer l'état de polarisation d'une composante quantique de $S_{10\text{-}n2}$ relative à un signal quantique $Q_{n2}$ intriqué — **3060**

Déterminer clé de cryptage quantique partagée, à partir de l'état de polarisation de la composante quantique déterminé et de l'information d'intrication des états de polarisation reçue — **3080**

**EP 4 576 612 A1**

| | Europäisches Patentamt European Patent Office Office européen des brevets | **RAPPORT DE RECHERCHE EUROPEENNE** | Numéro de la demande EP 24 22 1263 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CN 208 433 978 U (QUANTUMCTEK CO LTD) 25 janvier 2019 (2019-01-25) * le document en entier * | 1-11 | INV. H04B10/70 |
| A | EP 3 820 076 A1 (HUAWEI TECH CO LTD [CN]) 12 mai 2021 (2021-05-12) * colonnes 6-37 * * alinéas [0040] - [0041] * * alinéas [0046] - [0051] * * alinéas [0118] - [0121] * * figures 1, 2, 12 * | 1-11 | |

DOMAINES TECHNIQUES RECHERCHES (IPC)

H04B

Le présent rapport a été établi pour toutes les revendications

| Lieu de la recherche | Date d'achèvement de la recherche | Examinateur |
|---|---|---|
| Munich | 25 avril 2025 | Rolan Cisneros, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

35

# EP 4 576 612 A1

## ANNEXE AU RAPPORT DE RECHERCHE EUROPEENNE
## RELATIF A LA DEMANDE DE BREVET EUROPEEN NO.

EP 24 22 1263

25-04-2025

| Document brevet cité au rapport de recherche | Date de publication | Membre(s) de la famille de brevet(s) | | Date de publication |
|---|---|---|---|---|
| CN 208433978 U | 25-01-2019 | AUCUN | | |
| EP 3820076 A1 | 12-05-2021 | CN | 110752913 A | 04-02-2020 |
| | | EP | 3820076 A1 | 12-05-2021 |
| | | ES | 2980162 T3 | 30-09-2024 |
| | | WO | 2020020100 A1 | 30-01-2020 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. BENNETT** ; **G. BRASSARD** ; **D. MERMIN**. Quantum cryptography without Bell's theorem. *Physical Review Letters*, 1992, vol. 68 (5), 557-559